(19) Europäisches Patentamt
European Patent Office
Office européen des brevets

(11) **EP 4 554 105 A1**

(12) **EUROPEAN PATENT APPLICATION**
published in accordance with Art. 153(4) EPC

(43) Date of publication:
**14.05.2025 Bulletin 2025/20**

(21) Application number: **23834628.2**

(22) Date of filing: **20.06.2023**

(51) International Patent Classification (IPC):
**H04B 7/06** (2006.01)

(52) Cooperative Patent Classification (CPC):
**H04B 7/06**

(86) International application number:
**PCT/CN2023/101358**

(87) International publication number:
**WO 2024/007854 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.07.2022 CN 202210794260**

(71) Applicant: **Datang Mobile Communications Equipment Co., Ltd.**
**Beijing 100085 (CN)**

(72) Inventors:
• **ZHANG, Xin**
  **Beijing 100085 (CN)**
• **SONG, Lei**
  **Beijing 100085 (CN)**
• **SU, Xin**
  **Beijing 100085 (CN)**

(74) Representative: **Cabinet Nony**
  **11 rue Saint-Georges**
  **75009 Paris (FR)**

(54) **CODEBOOK TRANSMISSION METHOD, APPARATUS AND STORAGE MEDIUM**

(57)  Provided in the embodiments of the present disclosure are a codebook transmission method, an apparatus and a storage medium. The method is applied to a terminal, and comprises: receiving a configuration message sent by a network device, the configuration message comprising a measurement signal and a codebook indication; on the basis of the measurement signal and the codebook indication, determining a first codebook and a second codebook, the first codebook being used for determining a beamforming codebook used by the network device, and the second codebook being used for determining a beamforming codebook used by an RIS; and sending the first codebook and the second codebook to the network device.

```
┌──────────────────────────────────────────────────────────────────────┐
│ Receiving a configuration message transmitted from a network device,   │── 101
│ where the configuration message includes a measurement signal and a    │
│ codeword indicator                                                      │
└──────────────────────────────────────────────────────────────────────┘
                                    ↓
┌──────────────────────────────────────────────────────────────────────┐
│ Determining a first codeword and a second codeword based on the         │── 102
│ measurement signal and the codeword indicator, where the first codeword │
│ is used to determine a beamforming codeword used by the network device, │
│ and the second codeword is used to determine a beamforming codeword     │
│ used by an RIS                                                          │
└──────────────────────────────────────────────────────────────────────┘
                                    ↓
┌──────────────────────────────────────────────────────────────────────┐
│ Transmitting the first codeword and the second codeword to the network  │── 103
│ device                                                                  │
└──────────────────────────────────────────────────────────────────────┘
```

FIG. 1

EP 4 554 105 A1

**Description**

CROSS-REFERENCES TO RELATED APPLICATIONS

The present application claims priority to Chinese patent application No. 2022107942605 filed on July 05, 2022, entitled "Codebook Transmission Method, Apparatus and Storage Medium", which is hereby incorporated by reference in its entirety.

FIELD

The present application relates to the field of communications, and in particular, to methods and apparatuses for codeword transmission, and storage mediums.

BACKGROUND

As a low-cost and practical beamforming technology, a codeword feedback-based beamforming technology is widely used in the 4th generation mobile communication (4G)/5th generation mobile communication (5G) networks.
In a communication system that uses a reconfigurable intelligent meta-surface (RIS) for coverage enhancement, in addition to beamforming by a base station, beamforming by the RIS also needs to be considered. The beamforming by the RIS is controlled by the base station. A traditional codeword feedback-based beamforming technology only supports feeding back a beamforming codeword for the base station, and cannot feedback a beamforming codeword for the RIS, resulting in the base station being unable to use the RIS for enhancing coverage.

BRIEF SUMMARY

In view of problems in the related art, embodiments of the present application provide methods and apparatuses for codeword transmission, and storage mediums.
An embodiment of the present application provides a method for codeword transmission, performed by a terminal, including:

receiving a configuration message transmitted from a network device, where the configuration message includes a measurement signal and a codeword indicator;

determining a first codeword and a second codeword based on the measurement signal and the codeword indicator, where the first codeword is used to determine a beamforming codeword used by the network device, and the second codeword is used to determine a beamforming codeword used by a reconfigurable intelligent meta-surface (RIS); and

transmitting the first codeword and the second codeword to the network device.

In some embodiments, the codeword indicator includes one or more of the following:

a second identifier;

a first identifier and a second identifier; or

an index of an identifier pair consisting of a first identifier and a second identifier,

where the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

In some embodiments, determining the first codeword and the second codeword based on the measurement signal and the codeword indicator includes:

in case of receiving a group of configuration messages transmitted from the network device, and a codeword indicator in the configuration message including the second identifier, determining the second codeword based on the second identifier; and

determining a first codeword based on a first set and a channel measurement result corresponding to the measurement signal, where the first set is a beamforming codebook used by the network device.

In some embodiments, determining the first codeword and the second codeword based on the measurement signal and the codeword indicator includes:

in case of receiving a group of configuration messages transmitted from the network device, and a codeword indicator in the configuration message including the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

In some embodiments, determining the first codeword and the second codeword based on the measurement signal and the codeword indicator includes:

in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to the terminal;

determining the first codeword based on the channel measurement result corresponding to the channel from the network device to the RIS and a first set, where the first set is a beamforming codebook used by the network device; and

determining the second codeword based on the channel measurement result corresponding to the channel from the RIS to the terminal and a second set, where the second set is a beamforming codebook used by the RIS.

In some embodiments, determining the first codeword and the second codeword based on the measurement signal and the codeword indicator includes:

in case of receiving multiple groups of configuration messages transmitted from the network device, and a codeword indicator in each group of configuration messages including the first identifier and the second identifier, determining a third codeword and a fourth codeword corresponding to each group of configuration messages based on a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

In some embodiments, determining the first codeword and the second codeword based on the measurement signal and the codeword indicator includes:

in case of receiving multiple groups of configuration messages transmitted from the network device, and a codeword indicator in each group of configuration messages including the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

In some embodiments, transmitting the first codeword and the second codeword to the network device includes: transmitting an identifier of the first codeword and an identifier of the second codeword to the network device in a fixed overhead way.

In some embodiments, transmitting the first codeword and the second codeword to the network device includes: transmitting an index of a codeword pair consisting of the first codeword and the second codeword to the network device in a fixed overhead way.

In some embodiments, transmitting the first codeword and the second codeword to the network device includes: transmitting an identifier of the first codeword and an identifier of the second codeword to the network device in a segmented codeword transmission way.

In some embodiments, transmitting the identifier of the first codeword and the identifier of the second codeword to the network device in the segmented codeword transmission way includes:

transmitting the identifier of the second codeword and an identifier length of the first codeword to the network device as a first segment; and

transmitting the identifier of the first codeword to the network device as a second segment.

In some embodiments, in case that a relative position between the network device and the RIS is fixed, a transmission time interval of the second segment is longer than a transmission time interval of the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

An embodiment of the present application further provides a method for codeword transmission, performed by a network device, including:

transmitting a configuration message to a terminal, where the configuration message includes a measurement signal and a codeword indicator, the measurement signal and the codeword indicator are used to determine a first codeword and a second codeword, the first codeword is used to determine a beamforming codeword used by the network device, and the second codeword is used to determine a beamforming codeword used by a reconfigurable intelligent meta-surface (RIS); and

receiving the first codeword and the second codeword transmitted from the terminal.

In some embodiments, receiving the first codeword and the second codeword transmitted from the terminal includes:
receiving an identifier of the first codeword and an identifier of the second codeword transmitted from the terminal in a fixed overhead way.

In some embodiments, receiving the first codeword and the second codeword transmitted from the terminal includes:
receiving an index of a codeword pair consisting of the first codeword and the second codeword transmitted from the terminal in a fixed overhead way.

In some embodiments, receiving the first codeword and the second codeword transmitted from the terminal includes:
receiving an identifier of the first codeword and an identifier of the second codeword transmitted from the terminal in a segmented codeword transmission way.

In some embodiments, receiving the identifier of the first codeword and the identifier of the second codeword transmitted from the terminal in the segmented codeword transmission way includes:

receiving a first segment transmitted from the terminal, where the first segment is the identifier of the second codeword and an identifier length of the first codeword; and

receiving a second segment transmitted from the terminal, where the second segment is the identifier of the first codeword.

In some embodiments, in case that a relative position between the network device and the RIS is fixed, a reception time interval for the second segment is longer than a reception time interval for the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

An embodiment of the present application further provides a terminal, including a memory, a transceiver and a processor,

where the memory is used for storing a computer program, the transceiver is used for receiving and transmitting data under control of the processor, and the processor is used for reading a computer program in the memory and performing the following operations of:

receiving a configuration message transmitted from a network device, where the configuration message includes a measurement signal and a codeword indicator;

determining a first codeword and a second codeword based on the measurement signal and the codeword indicator, where the first codeword is used to determine a beamforming codeword used by the network device, and the second codeword is used to determine a beamforming codeword used by a reconfigurable intelligent meta-surface (RIS); and

transmitting the first codeword and the second codeword to the network device.

In some embodiments, the codeword indicator includes one or more of the following:

a second identifier;

a first identifier and a second identifier; or

an index of an identifier pair consisting of a first identifier and a second identifier,

where the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

In some embodiments, determining the first codeword and the second codeword based on the measurement signal and the codeword indicator includes:

in case of receiving a group of configuration messages transmitted from the network device, and a codeword indicator in the configuration message including the second identifier, determining the second codeword based on the second identifier; and

determining a first codeword based on a first set and a channel measurement result corresponding to the measurement signal, where the first set is a beamforming codebook used by the network device.

In some embodiments, determining the first codeword and the second codeword based on the measurement signal and the codeword indicator includes:

in case of receiving a group of configuration messages transmitted from the network device, and a codeword indicator in the configuration message including the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

In some embodiments, determining the first codeword and the second codeword based on the measurement signal and the codeword indicator includes:

in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to the terminal;

determining the first codeword based on the channel measurement result corresponding to the channel from the network device to the RIS and a first set, where the first set is a beamforming codebook used by the network device; and

determining the second codeword based on the channel measurement result corresponding to the channel from the RIS to the terminal and a second set, where the second set is a beamforming codebook used by the RIS.

In some embodiments, determining the first codeword and the second codeword based on the measurement signal and the codeword indicator includes:

in case of receiving multiple groups of configuration messages transmitted from the network device, and a codeword indicator in each group of configuration messages including the first identifier and the second identifier, determining a third codeword and a fourth codeword corresponding to each group of configuration messages based on a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

In some embodiments, determining the first codeword and the second codeword based on the measurement signal and the codeword indicator includes:

in case of receiving multiple groups of configuration messages transmitted from the network device, and a codeword indicator in each group of configuration messages including the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and
determining the first codeword and the second codeword based on channel measurement results respectively corresponding to measurement signals in the multiple groups of configuration messages and third codewords and fourth codewords respectively corresponding to the multiple groups of configuration messages.

In some embodiments, transmitting the first codeword and the second codeword to the network device includes: transmitting an identifier of the first codeword and an identifier of the second codeword to the network device in a fixed overhead way.
In some embodiments, transmitting the first codeword and the second codeword to the network device includes: transmitting an index of a codeword pair consisting of the first codeword and the second codeword to the network device in a fixed overhead way.
In some embodiments, transmitting the first codeword and the second codeword to the network device includes: transmitting an identifier of the first codeword and an identifier of the second codeword to the network device in a segmented codeword transmission way.
In some embodiments, transmitting the identifier of the first codeword and the identifier of the second codeword to the network device in the segmented codeword transmission way includes:

transmitting the identifier of the second codeword and an identifier length of the first codeword to the network device as a first segment; and

transmitting the identifier of the first codeword to the network device as a second segment.

In some embodiments, in case that a relative position between the network device and the RIS is fixed, a transmission time interval of the second segment is longer than a transmission time interval of the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

An embodiment of the present application further provides a network device, including a memory, a transceiver and a processor,

where the memory is used for storing a computer program, the transceiver is used for receiving and transmitting data under control of the processor, and the processor is used for reading a computer program in the memory and performing the following operations of:

transmitting a configuration message to a terminal, where the configuration message includes a measurement signal and a codeword indicator, the measurement signal and the codeword indicator are used to determine a first codeword and a second codeword, the first codeword is used to determine a beamforming codeword used by the network device, and the second codeword is used to determine a beamforming codeword used by a reconfigurable intelligent meta-surface (RIS); and

receiving the first codeword and the second codeword transmitted from the terminal.

In some embodiments, receiving the first codeword and the second codeword transmitted from the terminal includes:
receiving an identifier of the first codeword and an identifier of the second codeword transmitted from the terminal in a fixed overhead way.

In some embodiments, receiving the first codeword and the second codeword transmitted from the terminal includes:
receiving an index of a codeword pair consisting of the first codeword and the second codeword transmitted from the terminal in a fixed overhead way.

In some embodiments, receiving the first codeword and the second codeword transmitted from the terminal includes:
receiving an identifier of the first codeword and an identifier of the second codeword transmitted from the terminal in a segmented codeword transmission way.

In some embodiments, receiving the identifier of the first codeword and the identifier of the second codeword transmitted from the terminal in the segmented codeword transmission way includes:

receiving a first segment transmitted from the terminal, where the first segment is the identifier of the second codeword and an identifier length of the first codeword; and

receiving a second segment transmitted from the terminal, where the second segment is the identifier of the first codeword.

In some embodiments, in case that a relative position between the network device and the RIS is fixed, a reception time interval for the second segment is longer than a reception time interval for the first segment.

In some embodiments, the configuration message further includes a first flag bit, where the first flag bit is used to characterize a codeword type corresponding to an identifier included in the codeword indicator; or

the configuration message further includes a second flag bit, where the second flag bit is used to characterize a quantity of identifiers included in the codeword indicator; or

the configuration message further includes a codeword feedback resource identifier, where the codeword feedback resource identifier is used to characterize a resource for the terminal to perform codeword feedback.

An embodiment of the present application further provides an apparatus for codeword transmission, including:

a first receiving module, used for receiving a configuration message transmitted from a network device, where the configuration message includes a measurement signal and a codeword indicator;

a first determining module, used for determining a first codeword and a second codeword based on the measurement signal and the codeword indicator, where the first codeword is used to determine a beamforming codeword used by the network device, and the second codeword is used to determine a beamforming codeword used by a reconfigurable intelligent meta-surface (RIS); and

a first transmitting module, used for transmitting the first codeword and the second codeword to the network device.

In some embodiments, the codeword indicator includes one or more of the following:

a second identifier;

a first identifier and a second identifier; or

an index of an identifier pair consisting of a first identifier and a second identifier,

where the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

In some embodiments, the first determining module is specifically used for: in case of receiving a group of configuration messages transmitted from the network device, and a codeword indicator in the configuration message including the second identifier, determining the second codeword based on the second identifier; and
determining a first codeword based on a first set and a channel measurement result corresponding to the measurement signal, where the first set is a beamforming codebook used by the network device.
In some embodiments, the first determining module is specifically used for: in case of receiving a group of configuration messages transmitted from the network device, and a codeword indicator in the configuration message including the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

In some embodiments, the first determining module is specifically used for: in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to a terminal;

determining the first codeword based on the channel measurement result corresponding to the channel from the network device to the RIS and a first set, where the first set is a beamforming codebook used by the network device; and

determining the second codeword based on the channel measurement result corresponding to the channel from the RIS to the terminal and a second set, where the second set is a beamforming codebook used by the RIS.

In some embodiments, the first determining module is specifically used for: in case of receiving multiple groups of configuration messages transmitted from the network device, and a codeword indicator in each group of configuration messages including the first identifier and the second identifier, determining a third codeword and a fourth codeword corresponding to each group of configuration messages based on a first identifier and a second identifier in each group of configuration messages; and
determining the first codeword and the second codeword based on channel measurement results respectively corresponding to measurement signals in the multiple groups of configuration messages and third codewords and fourth codewords respectively corresponding to the multiple groups of configuration messages.

In some embodiments, the first determining module is specifically used for: in case of receiving multiple groups of configuration messages transmitted from the network device, and a codeword indicators in each group of configuration messages including the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and
determining the first codeword and the second codeword based on channel measurement results respectively corresponding to measurement signals in the multiple groups of configuration messages and third codewords and fourth codewords respectively corresponding to the multiple groups of configuration messages.

In some embodiments, the first transmitting module is specifically used for: transmitting an identifier of the first codeword and an identifier of the second codeword to the network device in a fixed overhead way.

In some embodiments, the first transmitting module is specifically used for: transmitting an index of a codeword pair consisting of the first codeword and the second codeword to the network device in a fixed overhead way.

In some embodiments, the first transmitting module is specifically used for: transmitting an identifier of the first codeword and an identifier of the second codeword to the network device in a segmented codeword transmission way.

In some embodiments, the first transmitting module is specifically used for: transmitting the identifier of the second codeword and an identifier length of the first codeword to the network device as a first segment; and
transmitting the identifier of the first codeword to the network device as a second segment.

In some embodiments, in case that a relative position between the network device and the RIS is fixed, a transmission time interval of the second segment is longer than a transmission time interval of the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

An embodiment of the present application further provides an apparatus for codeword transmission, including:

a second transmitting module, used for transmitting a configuration message to a terminal, where the configuration message includes a measurement signal and a codeword indicator, the measurement signal and the codeword indicator are used to determine a first codeword and a second codeword, the first codeword is used to determine a beamforming codeword used by a network device, and the second codeword is used to determine a beamforming codeword used by a reconfigurable intelligent meta-surface (RIS); and

a second receiving module, used for receiving the first codeword and the second codeword transmitted from the terminal.

In some embodiments, the second receiving module is specifically used for: receiving an identifier of the first codeword and an identifier of the second codeword transmitted from the terminal in a fixed overhead way.

In some embodiments, the second receiving module is specifically used for: receiving an index of a codeword pair consisting of the first codeword and the second codeword transmitted from the terminal in a fixed overhead way.

In some embodiments, the second receiving module is specifically used for: receiving an identifier of the first codeword and an identifier of the second codeword transmitted from the terminal in a segmented codeword transmission way.

In some embodiments, the second receiving module is specifically used for: receiving a first segment transmitted from the terminal, where the first segment is the identifier of the second codeword and an identifier length of the first codeword; and
receiving a second segment transmitted from the terminal, where the second segment is the identifier of the first codeword.

In some embodiments, in case that a relative position between the network device and the RIS is fixed, a reception time interval for the second segment is longer than a reception time interval for the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

An embodiment of the present application further provides a processor-readable storage medium, where the processor-readable storage medium stores a computer program, and the computer program is used to cause a processor to perform the methods for codeword transmission as described above.

An embodiment of the present application further provides a computer-readable storage medium, where the computer-readable storage medium stores a computer program, and the computer program is used to cause a computer to perform the methods for codeword transmission as described above.

An embodiment of the present application further provides a communication device-readable storage medium, where the communication device-readable storage medium stores a computer program, and the computer program is used to cause a communication device to perform the methods for codeword transmission as described above.

An embodiment of the present application further provides a chip product-readable storage medium, where the chip product-readable storage medium stores a computer program, and the computer program is used to cause a chip product to perform the methods for codeword transmission as described above.

In the methods and apparatus for codeword transmission, and storage mediums provided by the embodiments of the present application, by receiving the configuration message transmitted from the network device, determining the first codeword and the second codeword based on the measurement signal and the codeword indicator in the configuration message, and transmitting the first codeword and the second codeword to the network device, the network device determines the beamforming codeword used by itself and the beamforming codeword used by the RIS based on the first codeword and the second codeword, thereby improving a signal quality by using an RIS-based wireless communication system.

## BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.

FIG. 1 is a first schematic flowchart of a method for codeword transmission according to an embodiment of the present application;

FIG. 2 is a first schematic diagram of codewords respectively used by a base station and a terminal at different moments according to an embodiment of the present application;

FIG. 3 is a second schematic diagram of codewords respectively used by a base station and a terminal at different moments according to an embodiment of the present application;

FIG. 4 is a schematic diagram of dividing a channel measurement result according to an embodiment of the present application;

FIG. 5 is a schematic diagram of transmitting a fixed overhead codeword according to an embodiment of the present application;

FIG. 6 is a schematic diagram of transmitting a segmented codeword according to an embodiment of the present application;

FIG. 7 is a schematic diagram of a codeword format for transmitting a segmented codeword according to an embodiment of the present application;

FIG. 8 is a second schematic flowchart of a method for codeword transmission according to an embodiment of the present application;

FIG. 9 is a schematic structural diagram of a terminal according to an embodiment of the present application;

FIG. 10 is a schematic structural diagram of a network device according to an embodiment of the present application;

FIG. 11 is a first schematic structural diagram of an apparatus for codeword transmission according to an embodiment of the present application; and

FIG. 12 is a second schematic structural diagram of an apparatus for codeword transmission according to an embodiment of the present application.

DETAILED DESCRIPTION

In a reconfigurable intelligent meta-surface (RIS)-based wireless communication link, three entities exist: a base station, an RIS, and a terminal/user equipment (UE). A high-frequency band carrier propagation has large loss. The base station needs to perform beamforming to increase a coverage of a wireless signal. The RIS needs to perform secondary beamforming on the signal transmitted from the base station to resist path loss.

In order to use the RIS to provide a better service performance for UE by an RIS-based wireless communication system, a base station needs to adjust the RIS while performing beamforming, so that the RIS may perform secondary beamforming (phase control) on the signal transmitted from the base station as needed to obtain a beamforming gain. Whether it is the beamforming by the base station or the phase control by the RIS, the beamforming gain depends on the obtained channel information.

In the RIS-based wireless communication system, the RIS can be used to perform secondary beamforming for the UE to resist path loss and improve signal quality. However, in the RIS-based wireless communication system, the terminal needs to feed back not only a beamforming codeword for the base station, but also a beamforming codeword at the RIS. However, a traditional codeword feedback-based beamforming technology only supports feeding back a beamforming codeword for the base station, and the beamforming codeword for the base station is beamforming codeword information for the base station pointing to the RIS or the UE, and the beamforming codeword at the RIS cannot be determined.

In order to solve a problem of poor signal quality, the present application provides a method for codeword transmission. A configuration message transmitted from a network device is received, and a first codeword for determining a beamforming codeword used by the network device and a second codeword for determining a beamforming codeword used by the RIS are fed back to the network device based on a measurement signal and a codeword indicator in the configuration message, thereby improving the signal quality by using an RIS-based wireless communication system.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding of embodiments of the present application, some relevant knowledge is first introduced as follows.

A procedure for digital-analog hybrid beamforming in the related art is as follows.

Step 1: analog beamforming is determined.

Step 2: a base station transmits a reference signal.

Step 3: a UE receives the reference signal transmitted from the base station for measurement, and feeds back channel information/beam information to the base station.

Step 4: the base station receives the information fed back by the UE and determines a digital precoding based on the information reported by the UE.

In the above procedure, there are two types of digital precoding implementation schemes: one type is a codeword-based precoding scheme, and the other type is a non-codeword precoding scheme.

A codeword-based precoding scheme uses a codeword to feed back channel information (channel state information (CSI)). There are two kinds of non-codeword beamforming schemes, one kind is to directly obtain channel information (UE feedback or time division duplexing (TDD) reciprocity obtaining), and the other kind is a beam scanning-based beamforming scheme, in which the UE needs to feed back beam measurement information to the base station.

The new radio (NR) defines two types of CSI feedback methods: one type is a Type I CSI feedback method with normal precision, which has a normal precision spatial resolution and uses a codeword-based precoding matrix indicator (PMI) for feedback; the other type is an enhanced Type II CSI feedback method with a high precision spatial resolution.

An expression for a two-level codeword structure used by the NR is as follows:

$$W = W_1 W_2,$$

where $W_1$ is a first-level codeword, and describes long-term and broadband characteristics; and $W_2$ is a second-level codeword, describes short-term and subband characteristics, is composed of weighted column selection vectors, and is used for beam selection (in case that L > 4) and phase adjustment.

The first-level codeword $W_1$ is based on a block diagonal structure, and an expression for the first-level codeword $W_1$ is as follows:

$$W_1 = \begin{bmatrix} B & 0 \\ 0 & B \end{bmatrix},$$

where $W_1$ is the first-level codeword, and describes long-term and broadband characteristics; and B is a block diagonal matrix composed of L oversampled two-dimensional discrete Fourier transform (DFT) beams, where two diagonal blocks are quantized for two different polarization directions, and the two sets of DFT beams are the same.

In the high-precision Type II codeword, a role of $W_2$ is to linearly merge the DFT beams in $W_1$. Elements in $W_2$ are complex numbers, which are fed back in a form of amplitude and phase.

The NR supports periodic, semi-periodic and aperiodic CSI reporting.

In a long term evolution (LTE) system of universal mobile communication technologies, CSI information is divide into multiple parts, each part is reported independently, and the complete CSI can only be obtained by reporting at multiple subframes. This method has poor robustness and complex design.

In order to ensure that the CSI information is fully reported in one time slot, the NR adopts two CSI information reporting methods.

Undivided CSI information padded with zeros: in this method, the feedback overhead is ensured to be constant in all cases by padding with zeros. A quantity of padded zeros is determined by the difference between maximum feedback overhead and actual CSI feedback overhead under a feedback parameter configured by the base station. This method is used for Type I CSI feedback.

Divided CSI information: the CSI information is divided into two parts. A quantity of bits of the first part (part1) is constant, and a quantity of bits of the second part (part2) can be determined by the content of the first part. The composition of part1 and part2 is different for different codeword types.

Type I CSI: part1 includes a rank indication (RI), a CSI-RS resource indicator (CRI) and a channel quality indicator (CQI) for the first codeword; and part2 includes a layer indicator (LI) and a PMI, and further includes a CQI for the second codeword in case that RI is greater than 4.

Type II CSI: part1 includes a RI, a CQI and a quantity of non-zero bandwidth amplitude coefficients per layer; and part2 includes an LI and a PMI. For Type II CSI feedback, a quantity of bits of CSI information feedback is also related to the quantity of non-zero bandwidth amplitude coefficients per layer, which is further included in part 1.

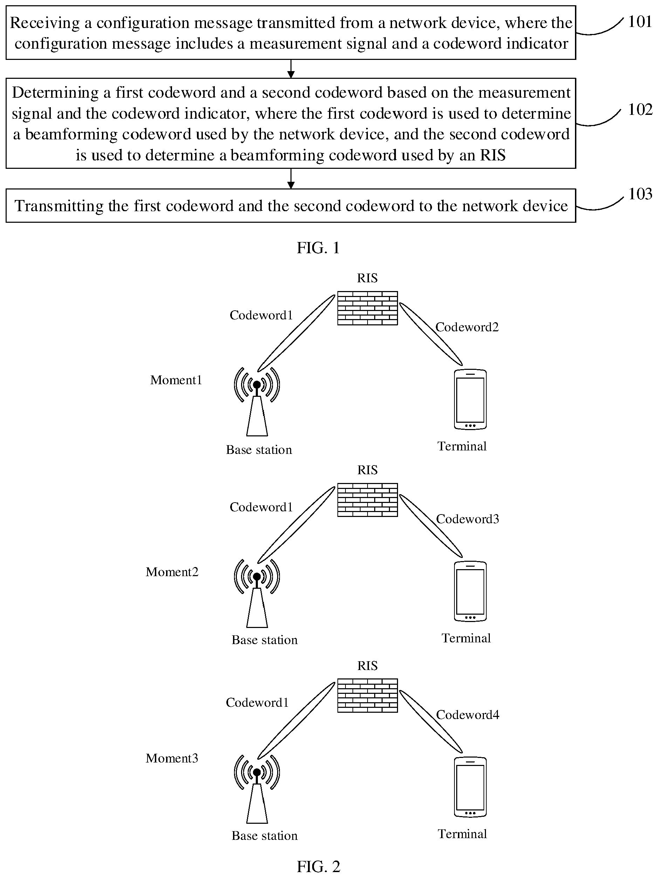

FIG. 1 is a first schematic flowchart of a method for codeword transmission according to an embodiment of the present application. As shown in FIG. 1, an embodiment of the present application provides a method for codeword transmission, which may be performed by a terminal, such as a mobile phone, etc. The method includes the following steps.

Step 101: receiving a configuration message transmitted from a network device, where the configuration message includes a measurement signal and a codeword indicator.

Specifically, the terminal receives the configuration message transmitted from the network device, where the configuration message may be one or more groups, and each group of configuration messages includes the measurement signal and the codeword indicator.

The measurement signal may be a channel state information-reference signal (CSI-RS), and the codeword indicator may be an identifier or an index.

Step 102: determining a first codeword and a second codeword based on the measurement signal and the codeword indicator, where the first codeword is used to determine a beamforming codeword used by the network device, and the second codeword is used to determine a beamforming codeword used by a reconfigurable intelligent meta-surface (RIS).

Specifically, the terminal and the network device both know the beamforming codebook used by the network device (i.e., a first set) and the beamforming codebook used by the RIS (i.e., the second set). The codeword indicated by the codeword indicator can be determined from the beamforming codebook based on the codeword indicator.

After receiving the measurement signal, the terminal measures the measurement signal to obtain a channel measurement result. The channel measurement result may be a measurement result that can determine a channel state, such as a reference signal receiving power (RSRP) and a signal to interference plus noise ratio (SINR).

The terminal selects one or more channel measurement results from the channel measurement results based on a preset rule, and determines the first codeword and the second codeword based on the indicated codeword corresponding to the selected one or more channel measurement results. The first codeword is for the network device to determine the beamforming codeword used by itself, and the second codeword is for the network device to determine the beamforming codeword used by the RIS.

The preset rule may be a first preset rule and a second preset rule. The first preset rule includes selecting a channel measurement result and a codeword whose 2-norm is greater than or equal to a 2-norm of a threshold, or selecting a channel measurement result and a codeword whose value of 2-norm ranks in the top n, where n is a positive integer greater than or equal to 1. The second preset rule includes selecting a channel measurement result with the largest channel measurement result or a channel measurement result whose value ranks in the top m, where m is a positive integer greater than or equal to 1.

Step 103: transmitting the first codeword and the second codeword to the network device.

Specifically, the terminal transmits the determined first codeword and the determined second codeword to the network device. The network device performs secondary calculation based on the first codeword and the second codeword transmitted from one or more terminals, and selects a codeword that better meets scheduling requirements for beamforming for itself and the RIS.

In the method for codeword transmission provided by the embodiment of the present application, by receiving the configuration message transmitted from the network device, determining the first codeword and the second codeword based on the measurement signal and the codeword indicator in the configuration message, and transmitting the first codeword and the second codeword to the network device, the network device determines the beamforming codeword used by itself and the beamforming codeword used by the RIS based on the first codeword and the second codeword, thereby improving a signal quality by using an RIS-based wireless communication system.

In some embodiments, the codeword indicator includes one or more of the following:

a second identifier;

a first identifier and a second identifier; or

an index of an identifier pair consisting of a first identifier and a second identifier,

where the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

Specifically, when the network device transmits the configuration message, the beamforming codeword used by the network device itself is the third codeword, the beamforming codeword used by the RIS is the fourth codeword, the identifier corresponding to the third codeword is the first identifier, the identifier corresponding to the fourth codeword is the second identifier, and an index corresponding to a codeword pair of the third codeword and the fourth codeword is the index of the identifier pair consisting of the first identifier and the second identifier.

FIG. 2 is a first schematic diagram of codewords respectively used by a base station and a terminal at different moments according to an embodiment of the present application. As shown in FIG. 2, in the RIS-based wireless communication system, at moment 1, the base station uses codeword 1 and the RIS uses codeword 2; at moment 2, the base station uses codeword 1 and the RIS uses codeword 3; and at moment 3, the base station uses codeword 1 and the RIS uses codeword 4.

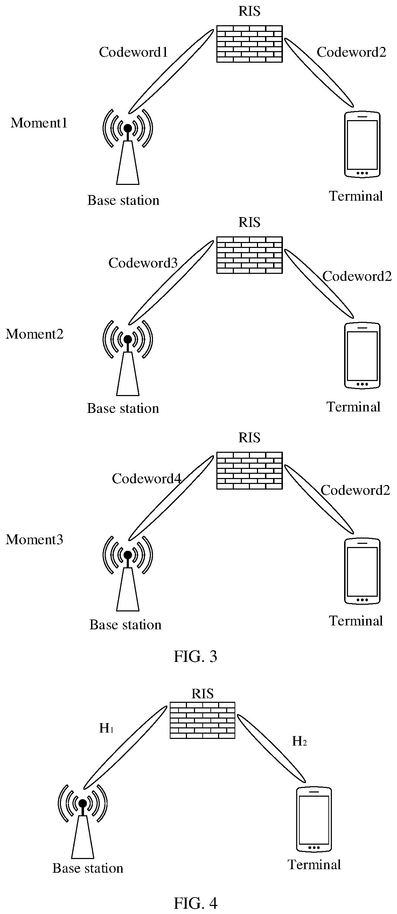

FIG. 3 is a second schematic diagram of codewords respectively used by a base station and a terminal at different moments according to an embodiment of the present application. As shown in FIG. 3, in an RIS-based wireless communication system, at moment 1, the base station uses codeword 1 and the RIS uses codeword 2; at moment 2, the base station uses codeword 3 and the RIS uses codeword 2; and at moment 3, the base station uses codeword 4 and the RIS uses codeword 2.

In the examples shown in FIG. 2 and FIG. 3, at the same moment, the base station uses only one codeword and the RIS uses only one codeword; and at different moment, the codewords used by the base station can be the same and the codewords used by the RIS can be the same.

When the terminal receives the configuration message transmitted from the network device, the codeword indicator in the configuration message may include one or more of the second identifier, the first identifier and the second identifier, and the index of the identifier pair consisting of the first identifier and the second identifier.

In the method for codeword transmission provided by the embodiment of the present application, indicators of the beamforming codeword used by the network device and/or the beamforming codeword used by the RIS is included in the codeword indicator when transmitting the configuration message, which is beneficial for the terminal to determine the first codeword and the second codeword based on the codeword indicator.

In some embodiments, determining the first codeword and the second codeword based on the measurement signal and the codeword indicator includes:

in case of receiving a group of configuration messages transmitted from the network device, and a codeword indicator in the configuration message including the second identifier, determining the second codeword based on the second identifier; and

determining a first codeword based on a first set and a channel measurement result corresponding to the measurement signal, where the first set is a beamforming codebook used by the network device.

Specifically, the terminal receives a group of configuration messages transmitted from the network device, and the codeword indicator in the configuration message includes the second identifier.

The terminal and the network device both know a codeword identifier correspondence table. The terminal determines the fourth codeword from the codeword identifier correspondence table based on the second identifier, and directly uses the fourth codeword as the second codeword.

The terminal measures the received measurement signal to obtain the channel measurement result. 2-norms of the channel measurement result and each codeword in the first set are calculated respectively, and one or more codewords selected based on the first preset rule are taken as the first codeword. The selected codeword is a codeword covering an entire channel range of the network device-RIS-UE.

For example, the channel measurement result is $H$, and there are codewords $\alpha_1$, $\alpha_2$ and $\alpha_3$ in the first set. $\|H\alpha_1\|_2$, $\|H\alpha_2\|_2$ and $\|H\alpha_3\|_2$ are calculated respectively. A threshold A is set, a 2-norm greater than or equal to the threshold A is selected. In case that $\|H\alpha_2\|_2$ is greater than the threshold A, codeword $\alpha_2$ is taken as the first codeword.

In the method for codeword transmission provided by the embodiment of the present application, the terminal determines the second codeword through the second identifier included in the codeword indicator, and determines the first codeword based on the channel measurement result corresponding to the measurement signal and 2-norms of each codeword in the first set, which is beneficial for the network device to determine the beamforming codeword used by itself and the beamforming codeword used by the RIS, thereby improving the signal quality by using the RIS-based wireless communication system.

In some embodiments, determining the first codeword and the second codeword based on the measurement signal and the codeword indicator includes:

in case of receiving a group of configuration messages transmitted from the network device, and a codeword indicator in the configuration message including the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

Specifically, the terminal receives a group of configuration messages transmitted from the network device, and the codeword indicator in the configuration message includes the index of the identifier pair consisting of the first identifier and the second identifier.

Both the terminal and the network device know an identifier pair index table and the codeword identifier correspondence table. The terminal first determines the identifier pair consisting of the first identifier and the second identifier based on the index of the identifier pair consisting of the first identifier and the second identifier; then determines the first identifier and the second identifier based on the identifier pair consisting of the first identifier and the second identifier; and finally determines the third codeword based on the first identifier, and determines the fourth codeword based on the second identifier.

The terminal directly takes the fourth codeword as the second codeword.

After determining the third codeword, the terminal searches for a neighbor codeword adjacent to the third codeword within a given range.

The terminal measures the received measurement signal and obtains a channel measurement result. The channel measurement result and 2-norms of the third codeword and the neighbor codeword are calculated respectively. One or more codewords selected based on the first preset rule are taken as the first codeword.

For example, the channel measurement result is $H$, the third codeword is $\alpha_0$, and the fourth codeword is $\beta_0$, and $\|H\alpha_0\|_2$ is calculated.

The neighbor codeword is a codeword that covers the neighbor area with the beamforming codeword used by the network device under the premise that the beamforming codeword used by the RIS remains unchanged. A neighbor codeword adjacent to the third codeword $\alpha_0$ is searched within a given range.

In case that the third codeword $\alpha_0$ has four neighbor codewords, namely $\alpha_A$, $\alpha_B$, $\alpha_C$ and $\alpha_D$, $\|H\alpha_A\|_2$, $\|H\alpha_B\|_2$, $\|H\alpha_C\|_2$ and $\|H\alpha_D\|_2$ are calculated respectively and compared with $\|H\alpha_0\|_2$. Comparison results are as follows:

$$\|H\alpha_A\|_2 > \|H\alpha_B\|_2 > \|H\alpha_0\|_2 > \|H\alpha_C\|_2 > \|H\alpha_D\|_2.$$

The preset rule is to select the top two 2-norms in terms of 2-norm value, $\|H\alpha_A\|_2$ and $\|H\alpha_B\|_2$ are selected, and $\alpha_A$ and $\alpha_B$ are taken as the first codeword.

In the method for codeword transmission provided by the embodiment of the present application, the terminal determines the third codeword and the fourth codeword based on the index of the identifier pair consisting of the first identifier and the second identifier included in the codeword indicator, determines the second codeword based on the fourth codeword, and determines the first codeword based on 2-norms of the channel measurement result corresponding to the measurement signal with the third codeword and a neighbor codeword of the third codeword, which is beneficial for the network device to determine the beamforming codeword used by itself and the beamforming codeword used by the RIS, thereby improving the signal quality by using the RIS-based wireless communication system.

In some embodiments, determining the first codeword and the second codeword based on the measurement signal and the codeword indicator includes:

in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to the terminal;

determining the first codeword based on the channel measurement result corresponding to the channel from the network device to the RIS and a first set, where the first set is a beamforming codebook used by the network device; and

determining the second codeword based on the channel measurement result corresponding to the channel from the RIS to the terminal and a second set, where the second set is a beamforming codebook used by the RIS.

Specifically, the terminal receives a group of configuration messages transmitted from the network device, measures the measurement signal in the configuration message, and obtains the channel measurement result. The channel measurement result is the measurement result of the channel of the network device-RIS-UE.

The terminal divides the channel measurement result, and the bilinear generalized approximate message passing algorithm may be used for dividing the channel measurement result.

FIG. 4 is a schematic diagram of dividing a channel measurement result according to an embodiment of the present application. As shown in FIG. 4, the terminal divides the channel measurement result H to obtain $H_1$ and $H_2$. After obtaining $H_1$ and $H_2$, it is necessary to determine which divided result is the channel measurement result corresponding to the channel from the network device to the RIS and which divided result is the channel measurement result corresponding to the channel from the RIS to the terminal. As shown in FIG. 4, $H_1$ is determined to be the channel measurement result corresponding to the channel from the network device to the RIS, and $H_2$ is determined to be the channel measurement result corresponding to the channel from the RIS to the terminal.

In case that the codeword indicator includes the second identifier, the fourth codeword $\beta_0$ is determined based on the second identifier, $\|H_1\beta_0\|_2$ and $\|H_2\beta_0\|_2$ are calculated respectively, and values of the two are compared. In case that $\|H_1\beta_0\|_2$ is greater than $\|H_2\beta_0\|_2$, $H_1$ is determined to be the channel measurement result corresponding to the channel from the RIS to the terminal, and $H_2$ is determined to be the channel measurement result corresponding to the channel from the network device to the RIS.

In case that the codeword indicator includes the first identifier and the second identifier, the third codeword $\alpha_0$ and

the fourth codeword $\beta_0$ are determined based on the first identifier and the second identifier, and $\|H_1\alpha_0\|_2$, $\|H_2\alpha_0\|_2$, $\|H_1\beta_0\|_2$ and $\|H_2\beta_0\|_2$ are calculated respectively, and values of the four are compared. In case that $\|H_1\alpha_0\|_2$ or $\|H_2\beta_0\|_2$ is the largest, $H_1$ is determined to be the channel measurement result corresponding to the channel from the network device to the RIS, and $H_2$ is determined to be the channel measurement result corresponding to the channel from the RIS to the terminal. In case that $\|H_2\alpha_0\|_2$ or $\|H_1\beta_0\|_2$ is the largest, $H_1$ is determined to be the channel measurement result corresponding to the channel from the RIS to the terminal, and $H_2$ is determined to be the channel measurement result corresponding to the channel from the network device to the RIS.

In case that the codeword indicator includes the index of the identifier pair consisting of the first identifier and the second identifier, the third codeword $\alpha_0$ and the fourth codeword $\beta_0$ are determined based on the index of the identifier pair consisting of the first identifier and the second identifier, and $\|H_1\alpha_0\|_2$, $\|H_2\alpha_0\|_2$, $\|H_1\beta_0\|_2$ and $\|H_2\beta_0\|_2$ are calculated respectively, and the values of the four are compared. In case that $\|H_1\alpha_0\|_2$ or $\|H_2\beta_0\|_2$ is the largest, $H_1$ is determined to be the channel measurement result corresponding to the channel from the network device to the RIS, and $H_2$ is determined to be the channel measurement result corresponding to the channel from the RIS to the terminal. In case that $\|H_2\alpha_0\|_2$ or $\|H_1\beta_0\|_2$ is the largest, $H_1$ is determined to be the channel measurement result corresponding to the channel from the RIS to the terminal, and $H_2$ is determined to be the channel measurement result corresponding to the channel from the network device to the RIS.

After determining the channel measurement result corresponding to the channel from the network device to the RIS, the 2-norm of the channel measurement result corresponding to the channel from the network device to the RIS with the codeword in the first set are calculated, one or more 2-norms are selected based on the first preset rule, and the codeword corresponding to the selected one or more 2-norms is determined as the first codeword.

After determining the channel measurement result corresponding to the channel from the RIS to the terminal, the 2-norm of the channel measurement result corresponding to the channel from the RIS to the terminal with the codeword in the second set are calculated, one or more 2-norms are selected based on the first preset rule, and the codeword corresponding to the selected one or more 2-norms is determined as the second codeword.

In the method for codeword transmission provided by the embodiment of the present application, the terminal divides the channel measurement result, determines the channel measurement result corresponding to the channel from the network device to the RIS and the channel measurement result corresponding to the channel from the RIS to the terminal based on the codeword indicated by the codeword indicator and the divided result, and determine the first codeword and the second codeword in conjunction with the first set and the second set, which is beneficial for the network device to determine the beamforming codeword used by itself and the beamforming codeword used by the RIS, thereby improving the signal quality using the RIS-based wireless communication system.

In some embodiments, determining the first codeword and the second codeword based on the measurement signal and the codeword indicator includes:

in case of receiving multiple groups of configuration messages transmitted from the network device, and a codeword indicator in each group of configuration messages including the first identifier and the second identifier, determining a third codeword and a fourth codeword corresponding to each group of configuration messages based on a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

Specifically, the terminal receives multiple groups of configuration messages transmitted from the network device, and the codeword indicator in each group of configuration messages includes the first identifier and the second identifier.

Based on the first identifier and the second identifier in each group of configuration messages, the terminal determines the beamforming codeword used by the network device and the beamforming codeword used by the RIS when the network device transmits each group of configuration messages, that is, determines the third codewords and the fourth codewords corresponding to each group of configuration messages.

The terminal measures the measurement signals in the received multiple groups of configuration messages, obtains the channel measurement results corresponding to the multiple groups of configuration messages respectively, selects one or more channel measurement results based on the second preset rule, and determines the first codeword and the second codeword base on a configuration message group corresponding to the selected channel measurement result and the third codeword and the fourth codeword corresponding to the configuration message group.

For example, the terminal receives M groups of configuration messages, obtains M channel measurement results, and selects the top two channel measurement results in terms of value based on the second preset rule. In case that $H_j$ and $H_k$ are the top two channel measurement results among the M channel measurement results, the third codeword corresponding to the j-th group of configuration messages and the third codeword corresponding to the k-th group of configuration messages are taken as the first codeword, and the fourth codeword corresponding to the j-th group of configuration messages and the fourth codeword corresponding to the k-th group of configuration messages are taken as the second codeword.

In the method for codeword transmission provided by the embodiment of the present application, by receiving multiple groups of configuration messages, the terminal determines the third codeword and the fourth codeword corresponding to each group of configuration messages based on the first identifier and the second identifier in each group of configuration messages, selects the channel measurement results corresponding to the measurement signals in the multiple groups of configuration messages, and determines the first codeword and the second codeword based on the configuration message group corresponding to the selected channel measurement results and the third codewords and the fourth codewords corresponding to the configuration message groups, which is beneficial for the network device to determine the beamforming codeword used by itself and the beamforming codeword used by the RIS, thereby improving the signal quality by using the RIS-based wireless communication system.

In some embodiments, determining the first codeword and the second codeword based on the measurement signal and the codeword indicator includes:

in case of receiving multiple groups of configuration messages transmitted from the network device, and a codeword indicator in each group of configuration messages including the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

Specifically, the terminal receives multiple groups of configuration messages transmitted from the network device. The codeword indicator in each group of configuration messages includes the index of the identifier pair consisting of the first identifier and the second identifier.

Based on the index of the identifier pair consisting of the first identifier and the second identifier in each group of configuration messages, the terminal first determines the identifier pair consisting of the first identifier and the second identifier corresponding to each group of configuration messages, then determines the first identifier and the second identifier corresponding to each group of configuration messages, and finally determines the third codeword and the fourth codeword corresponding to each group of configuration messages.

The terminal measures the measurement signals in the received multiple groups of configuration messages, obtains the channel measurement results corresponding to the multiple groups of configuration messages, selects one or more channel measurement results based on the second preset rule, and determines the first codeword and the second codeword base on a configuration message group corresponding to the selected channel measurement result and the third codeword and the fourth codeword corresponding to the configuration message group.

In the method for codeword transmission provided by the embodiment of the present application, by receiving multiple groups of configuration messages, the terminal determines the third codeword and the fourth codeword corresponding to each group of configuration messages based on the index of the identifier pair consisting of the first identifier and the second identifier in each group of configuration messages, selects the channel measurement results corresponding to the measurement signals in the multiple groups of configuration messages, and determines the first codeword and the second codeword based on the configuration message group corresponding to the selected channel measurement results and the third codeword and the fourth codeword corresponding to the configuration message group, which is beneficial for the network device to determine the beamforming codeword used by itself and the beamforming codeword used by the RIS, thereby improving the signal quality by using the RIS-based wireless communication system.

In some embodiments, transmitting the first codeword and the second codeword to the network device includes: transmitting an identifier of the first codeword and an identifier of the second codeword to the network device in a fixed overhead way.

Specifically, after determining the first codeword and the second codeword, the terminal transmits the identifier of the first codeword and the identifier of the second codeword to the network device in a fixed overhead way. After receiving the identifier of the first codeword and the identifier of the second codeword, the network device can obtain the first codeword and the second codeword based on the codeword identifier correspondence table.

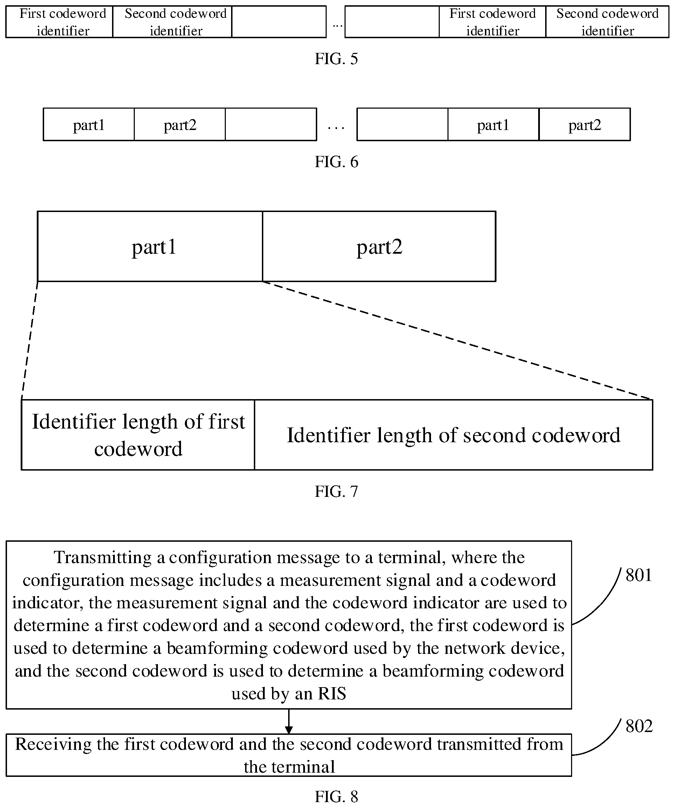

FIG. 5 is a schematic diagram of transmitting a fixed overhead codeword according to an embodiment of the present application. As shown in FIG. 5, the network device can indicate that a feedback resource length of the first codeword is A and a feedback resource length of the second codeword is B. The first codeword identifier is fixed to occupy overhead of A bits, and the second codeword identifier is fixed to occupy overhead of B bits. The terminal transmits the first codeword identifier and the second codeword identifier together to the network device.

A maximum length *L* of the codeword identifier is determined by the size *N* of the codebook, and the relationship between the two is as follows:

$$L = log_2(N),$$

where L represents the maximum length of the codeword identifier, and N represents the size of the codebook.

In case that an actual overhead of the first codeword identifier and/or the second codeword identifier is less than the fixed overhead, it is necessary to pad an unpadded position with zeros, and the zero padding method can be high-bit zero padding or low-bit zero padding.

For example, A is 4 bits. In case that 10 is padded with zeros in high bits, it may be 0010. In case that 10 is padded with zeros in low bits, it may be 1000.

In the method for codeword transmission provided by the embodiments of the present application, the terminal transmits the first codeword identifier and the second codeword identifier to the network device in a fixed overhead way, which is beneficial for the network device to simultaneously obtain the first codeword and the second codeword.

In some embodiments, transmitting the first codeword and the second codeword to the network device includes: transmitting an index of a codeword pair consisting of the first codeword and the second codeword to the network device in a fixed overhead way.

Specifically, the terminal and the network device know an index table of the codeword pair consisting of the codewords in the first set and the second set. After determining the first codeword and the second codeword, the terminal transmits the index of the codeword pair consisting of the first codeword and the second codeword to the network device in a fixed overhead way. After receiving the index of the codeword pair consisting of the first codeword and the second codeword, the network device can obtain the first codeword and the second codeword based on the index table of the codeword pair.

In the method for codeword transmission provided by the embodiments of the present application, the terminal transmits the index of the codeword pair consisting of the first codeword and the second codeword to the network device in a fixed overhead way, which is beneficial for the network device to simultaneously obtain the first codeword and the second codeword.

In some embodiments, transmitting the first codeword and the second codeword to the network device includes: transmitting an identifier of the first codeword and an identifier of the second codeword to the network device in a segmented codeword transmission way.

Specifically, FIG. 6 is a schematic diagram of transmitting a segmented codeword according to an embodiment of the present application. As shown in FIG. 6, segmented codeword transmission is to divide the codeword to be fed back into several segments for transmission. The terminal transmits the identifier of the first codeword and the identifier of the second codeword to the network device through part1 and part2 respectively in a segmented codeword transmission way.

In case that the actual overhead of part1 is less than the fixed overhead, the unpadded position is filled with zeros, and the zero padding method can be high-bit zero padding or low-bit zero padding. Part2 follows part1 and feeds back the identifier of the first codeword. In case that overhead exists, the overhead is the actual overhead of the identifier of the first codeword; and otherwise, it is 0.

In the method for codeword transmission provided by the embodiment of the present application, the terminal transmits the identifier of the first codeword and the identifier of the second codeword to the network device in a segmented codeword transmission way, which is beneficial for the network device to obtain the first codeword and the second codeword in segments.

In some embodiments, transmitting the identifier of the first codeword and the identifier of the second codeword to the network device in the segmented codeword transmission way includes:

transmitting the identifier of the second codeword and an identifier length of the first codeword to the network device as a first segment; and

transmitting the identifier of the first codeword to the network device as a second segment.

Specifically, FIG. 7 is a schematic diagram of a codeword format for transmitting a segmented codeword according to an embodiment of the present application. As shown in FIG. 7, the terminal uses part1 (first segment) to feed back the identifier of the second codeword and the identifier length of the first codeword to the network device. The identifier length of the first codeword is used to indicate whether there is a subsequent part2 and a bit length of part2. The feedback overhead of part1 is fixed. The terminal uses part2 (second segment) to feed back the identifier of the first codeword to the network device. The feedback overhead of part2 is not fixed. It can be chosen whether to feedback part2 based on requirements.

There are four cases for the identifier length of the first codeword.

A first case is that the identifier of the first codeword is not fed back, and the length of part2 is 0.

A second case is that the identifier of a short first codeword is fed back, and the length of part2 is a, where a is greater than 0, and the short first codeword is the codeword of the network device covering the current RIS.

A third case is that the identifier of a medium-length first codeword is fed back, and the length of part2 is b, where b is greater than a, and the medium-length first codeword is a set of all codewords of the network device.

A fourth case is that the identifier of a long first codeword is fed back, and the length of part2 is c+b, where c is an identifier length of a codeword of a neighbor cell, and the long first codeword includes the codeword of the neighbor cell in addition to all codebooks of the network device.

For the above four cases, four part2 length identifiers are defined: 00 indicates that the length of part2 is 0; 01 indicates the identifier length of the short first codeword; 10 indicates the length identifier of the medium-length first codeword; and 11 indicates the length identifier of the long first codeword.

For example, the length identifier of the short first codeword is defined as 2, and there are four first codewords covering the current RIS. The identifiers of the four first codewords are 10, 20, 30 and 40 respectively. Part 1 contains "01" and "0100...101", where "01" is the identifier length of the short first codeword and "0100...101" is the identifier of the second codeword. Part2 contains "40", where "40" is the identifier of the first codeword.

Optionally, following a traditional codeword design idea, the first codeword is still divided into two levels. The first level is composed of DFT codewords to describe long-term and broadband characteristics; and the second level describes short-term and sub-band characteristics, and is composed of weighted column selection vectors for beam selection and phase adjustment. The identifier of the first codeword in part2 is also divided into two levels.

In the method for codeword transmission provided by the embodiment of the present application, by feeding back the identifier of the second codeword and the identifier length of the first codeword to the network device in part1, and feeding back the identifier of the first codeword to the network device in part2, it is beneficial for the network device to obtain the first codeword and the second codeword in segments.

In some embodiments, in case that a relative position between the network device and the RIS is fixed, a transmission time interval of the second segment is longer than a transmission time interval of the first segment.

Specifically, in case that the relative position between the network device and the RIS is fixed, during the feedback of the second codeword, the beamforming codeword between the network device and the RIS may not change, and the terminal may transmit only part1 to the network device without transmitting part2, where part1 contains the identifier of the second codeword, and the identifier length of the first codeword is 0; and during the feedback of the first codeword, the beamforming codeword between the network and the RIS may change, and the terminal needs to transmit part1 and part2 to the network device, so that the transmission time interval of the second segment is longer than the transmission time interval of the first segment.

Optionally, the codeword feedback can be periodic, semi-periodic or non-periodic.

Optionally, in case that the codeword feedback is periodic, a feedback period of the first codeword is R times of a feedback period of the second codeword, where R is a positive integer.

In the method for codeword transmission provided by the embodiment of the present application, in case that the relative position between the network device and the RIS are fixed, the transmission time interval of part2 is longer than the transmission time interval of part1, which is beneficial for reducing signaling overhead.

Optionally, the terminal can determine which feedback method to use for codeword feedback based on the measurement result, and add a flag bit to the feedback information to inform the network device which method to use for feedback.

In some embodiments, the configuration message further includes a first flag bit, where the first flag bit is used to characterize a codeword type corresponding to an identifier included in the codeword indicator.

Specifically, the configuration message transmitted from the network device and received by the terminal further includes the first flag bit, where the first flag bit is used to characterize the codeword type corresponding to the identifier included in the codeword indicator, and the codeword type includes the beamforming codeword used by the network device and the beamforming codeword used by the RIS.

For example, the first flag bit being 1 characterizes that the identifier in the codeword indicator is the identifier of the beamforming codeword used by the network device; and the first flag bit being 0 indicates that the identifier in the codeword indicator is the identifier of the beamforming codeword used by the RIS.

In the method for codeword transmission provided by the embodiment of the present application, by characterizing the codeword type corresponding to the identifier included in the codeword indicator through the first flag bit, it is beneficial for the terminal to determine the first codeword and the second codeword.

In some embodiments, the configuration message further includes a second flag bit, where the second flag bit is used to characterize a quantity of identifiers included in the codeword indicator.

Specifically, the configuration message transmitted from the network device and received by the terminal further includes the second flag bit, where the second flag bit is used to characterize the quantity of identifiers included in the codeword indicator.

For example, the second flag bit being 0 characterizes that the quantity of identifiers included in the codeword indicator is 1; and the second flag bit being 1 characterizes that the quantity of identifiers included in the codeword indicator is 2.

In the method for codeword transmission provided by the embodiment of the present application, by characterizing the quantity of identifiers included in the codeword indicator through the second flag bit, it is beneficial for the terminal to determine the first codeword and the second codeword.

In some embodiments, the configuration message further includes a codeword feedback resource identifier, where the codeword feedback resource identifier is used to characterize a resource for the terminal to perform codeword feedback.

Specifically, the configuration message transmitted from the network device and received by the terminal further includes the codeword feedback resource identifier, where the codeword feedback resource identifier is used to characterize the resource for the terminal to perform codeword feedback. The terminal needs to feed back the first codeword and/or the second codeword to the network device on the resource corresponding to the codeword feedback resource identifier.

In the method for codeword transmission provided by the embodiment of the present application, by characterizing the resource for the terminal to perform codeword feedback through the codeword feedback resource identifier, it is beneficial for the network device to receive the first codeword and the second codeword.

FIG. 8 is a second schematic flowchart of a method for codeword transmission according to an embodiment of the present application. As shown in FIG. 8, an embodiment of the present application further provides a method for codeword transmission, which may be performed by a network device, such as a base station, etc. The method includes the following steps.

Step 801: transmitting a configuration message to a terminal, where the configuration message includes a measurement signal and a codeword indicator, the measurement signal and the codeword indicator are used to determine a first codeword and a second codeword, the first codeword is used to determine a beamforming codeword used by the network device, and the second codeword is used to determine a beamforming codeword used by a reconfigurable intelligent meta-surface (RIS).

Specifically, the network device transmits the configuration message to the terminal through the RIS. There may be one or more groups of configuration messages, and each group of configuration messages includes measurement signals and codeword indicators.

The measurement signal may be a channel state information-reference signal (CSI-RS), and the codeword indicator may be an identifier or an index.

The terminal and the network device both know the beamforming codebook used by the network device (i.e., a first set) and the beamforming codebook used by the RIS (i.e., the second set). The codeword indicated by the codeword indicator can be determined from the beamforming codebook based on the codeword indicator.

The terminal measures the received measurement signal to obtain the channel measurement result, selects one or more channel measurement results from the channel measurement results based on a preset rule, and determines the first codeword and the second codeword based on the indicated codeword corresponding to the selected one or more channel measurement results. The first codeword is for the network device to determine the beamforming codeword used by itself, and the second codeword is for the network device to determine the beamforming codeword used by the RIS.

Step 802: receiving the first codeword and the second codeword transmitted from the terminal.

Specifically, the network device receives the first codeword and the second codeword transmitted from one or more terminals, performs secondary calculation based on the received first codeword and the second codeword, and selects a codeword that better meets scheduling requirements for beamforming for itself and the RIS.

In the method for codeword transmission provided by the embodiment of the present application, by transmitting the configuration message to the terminal, the terminal determines the first codeword and the second codeword based on the measurement signal and the codeword indicator in the configuration message. The network device determines the beamforming codeword used by itself and the beamforming codeword used by the RIS based on the first codeword and the second codeword determined by the terminal, thereby improving a signal quality by using an RIS-based wireless communication system.

In some embodiments, receiving the first codeword and the second codeword transmitted from the terminal includes:

receiving an identifier of the first codeword and an identifier of the second codeword transmitted from the terminal in a fixed overhead way.

Specifically, the network device receives the identifier of the first codeword and the identifier of the second codeword transmitted from the terminal in a fixed overhead way.

After receiving the identifier of the first codeword and the identifier of the second codeword, the network device can obtain the first codeword and the second codeword based on a codeword identifier correspondence table.

The network device can indicate that a feedback resource length of the first codeword is A and a feedback resource length of the second codeword is B. The first codeword identifier is fixed to occupy overhead of A bits, and the second codeword identifier is fixed to occupy overhead of B bits. The terminal transmits the first codeword identifier and the second codeword identifier together to the network device.

In case that an actual overhead of the first codeword identifier and/or the second codeword identifier is less than the fixed overhead, it is necessary to pad an unpadded position with zeros, and the zero padding method can be high-bit zero padding or low-bit zero padding.

In the method for codeword transmission provided by the embodiment of the present application, the network device receives the first codeword identifier and the second codeword identifier transmitted from the terminal in a fixed overhead way, which is beneficial for simultaneously obtaining the first codeword and the second codeword identifier.

In some embodiments, receiving the first codeword and the second codeword transmitted from the terminal includes:

receiving an index of a codeword pair consisting of the first codeword and the second codeword transmitted from the terminal in a fixed overhead way.

Specifically, the network device receives the index of the codeword pair consisting of the first codeword and the second codeword transmitted from the terminal in a fixed overhead way.

After receiving the index of the codeword pair consisting of the first codeword and the second codeword, the network device can obtain the first codeword and the second codeword based on the index table of the codeword pair.

In the method for codeword transmission provided by the embodiment of the present application, the network device receives the index of the codeword pair consisting of the first codeword and the second codeword transmitted from the terminal in a fixed overhead way, which is beneficial for simultaneously obtaining the first codeword and the second codeword.

In some embodiments, receiving the first codeword and the second codeword transmitted from the terminal includes:

receiving an identifier of the first codeword and an identifier of the second codeword transmitted from the terminal in a segmented codeword transmission way.

Specifically, segmented codeword transmission is to divide the codeword to be fed back into several segments for transmission. The network device receives the identifier of the first codeword and the identifier of the second codeword through part1 and part2 respectively.

In case that the actual overhead of part1 is less than the fixed overhead, the unpadded position is padded with zeros, and the zero padding method can be high-bit zero padding or low-bit zero padding. Part2 follows part1 and feeds back the identifier of the first codeword. In case that overhead exists, the overhead is the actual overhead of the identifier of the first codeword; and otherwise, it is 0.

The network device receives part1 and part2 fed back by the terminal in segments, first decodes the content of part1, then decodes the content of part2, thereby obtaining the identifier of the first codeword and the identifier of the second codeword, and obtains the first codeword and the second codeword based on the identifier of the first codeword and the identifier of the second codeword.

In the method for codeword transmission provided by the embodiment of the present application, the network device receives the identifier of the first codeword and the identifier of the second codeword transmitted from the terminal in a segmented codeword transmission way, which is beneficial for obtaining the first codeword and the second codeword in segments.

In some embodiments, receiving the identifier of the first codeword and the identifier of the second codeword transmitted from the terminal in the segmented codeword transmission way includes:

receiving a first segment transmitted from the terminal, where the first segment is the identifier of the second codeword and an identifier length of the first codeword; and

receiving a second segment transmitted from the terminal, where the second segment is the identifier of the first codeword.

Specifically, the network device receives part1 (first segment) transmitted from the terminal, and obtains the identifier of the second codeword and the identifier length of the first codeword from part1. The feedback overhead of part1 is fixed.

The network device receives part2 (second segment) transmitted from the terminal, and obtains the identifier of the first codeword from part2. The feedback overhead of part2 is not fixed. It can be chosen whether to feedback part2 based on requirements.

In the method for codeword transmission provided by the embodiment of the present application, the network device obtains the identifier of the second codeword and the identifier length of the first codeword through part1, and obtains the identifier of the first codeword through part2, which is beneficial for obtaining the first codeword and the second codeword in segments.

In some embodiments, in case that a relative position between the network device and the RIS is fixed, a reception time interval for the second segment is longer than a reception time interval for the first segment.

Specifically, in case that the relative position between the network device and the RIS is fixed, during the feedback of the second codeword, the beamforming codeword between the network device and the RIS may not change, and the network device may only require the terminal to transmit part1 without transmitting part2, where part1 contains the identifier of the second codeword, and the identifier length of the first codeword is 0; and during the feedback of the first codeword, the beamforming codeword between the network and the RIS may change, and the network device requires the terminal to transmit part1 and part2, so that the transmission time interval of the second segment is longer than the transmission time interval of the first segment.

Optionally, the codeword feedback can be periodic, semi-periodic or non-periodic.

Optionally, in case that the codeword feedback is periodic, a feedback period of the first codeword is R times of a feedback period of the second codeword, where R is a positive integer.

In the method for codeword transmission provided by the embodiment of the present application, in case that the relative position between the network device and the RIS are fixed, the transmission time interval of part2 is longer than the transmission time interval of part1, which is beneficial for reducing signaling overhead.

In some embodiments, the configuration message further includes a first flag bit, where the first flag bit is used to characterize a codeword type corresponding to an identifier included in the codeword indicator.

Specifically, the configuration message transmitted from the network device to the terminal further includes the first flag bit, where the first flag bit is used to characterize the codeword type corresponding to the identifier included in the codeword indicator, and the codeword type includes the beamforming codeword used by the network device and the beamforming codeword used by the RIS.

For example, the first flag bit being 1 characterizes that the identifier in the codeword indicator is the identifier of the beamforming codeword used by the network device; and the first flag bit being 0 indicates that the identifier in the codeword indicator is the identifier of the beamforming codeword used by the RIS.

In the method for codeword transmission provided by the embodiment of the present application, by characterizing the codeword type corresponding to the identifier included in the codeword indicator through the first flag bit, it is beneficial for the terminal to determine the first codeword and the second codeword.

In some embodiments, the configuration message further includes a second flag bit, where the second flag bit is used to characterize a quantity of identifiers included in the codeword indicator.

Specifically, the configuration message transmitted from the network device to the terminal further includes the second flag bit, where the second flag bit is used to characterize the quantity of identifiers included in the codeword indicator.

For example, the second flag bit being 0 characterizes that the quantity of identifiers included in the codeword indicator is 1; and the second flag bit being 1 characterizes that the quantity of identifiers included in the codeword indicator is 2.

In the method for codeword transmission provided by the embodiment of the present application, by characterizing the quantity of identifiers included in the codeword indicator through the second flag bit, it is beneficial for the terminal to determine the first codeword and the second codeword.

In some embodiments, the configuration message further includes a codeword feedback resource identifier, where the codeword feedback resource identifier is used to characterize a resource for the terminal to perform codeword feedback.

Specifically, the configuration message transmitted from the network device to the terminal further includes the codeword feedback resource identifier, where the codeword feedback resource identifier is used to characterize the resource for the terminal to perform codeword feedback. The terminal needs to feed back the first codeword and/or the second codeword to the network device on the resource corresponding to the codeword feedback resource identifier.

In the method for codeword transmission provided by the embodiment of the present application, by characterizing the resource for the terminal to perform codeword feedback through the codeword feedback resource identifier, it is beneficial for the network device to receive the first codeword and the second codeword.

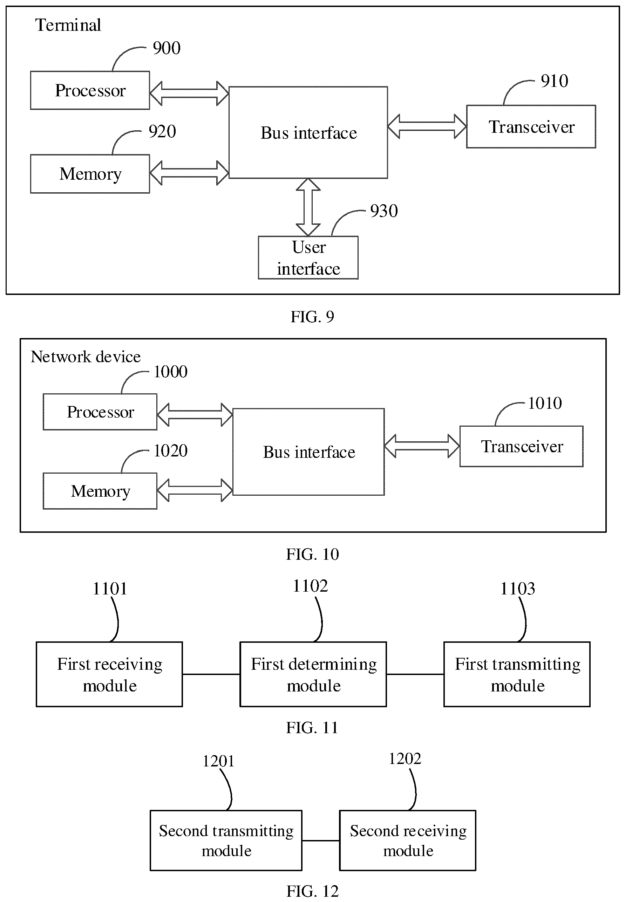

FIG. 9 is a schematic structural diagram of a terminal according to an embodiment of the present application. As shown in FIG. 9, the terminal includes a memory 920, a transceiver 900, and a processor 910, where the memory 920 is used for storing a computer program, the transceiver 900 is used for receiving and transmitting data under control of the processor 910, and the processor 910 is used for reading a computer program in the memory 920 and performing the following operations of:

receiving a configuration message transmitted from a network device, where the configuration message includes a measurement signal and a codeword indicator;

determining a first codeword and a second codeword based on the measurement signal and the codeword indicator, where the first codeword is used to determine a beamforming codeword used by the network device, and the second codeword is used to determine a beamforming codeword used by a reconfigurable intelligent meta-surface (RIS); and

transmitting the first codeword and the second codeword to the network device.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. A bus interface provides an interface. The transceiver 900 may include multiple elements, i.e., including a transmitter and a receiver, units for providing communication with various other devices over transmission media including wireless channels, wired channels, fiber optic cables, and the like. For different user devices, a user interface 930 may be an interface capable of externally or internally connecting required devices, and the connected devices include but are not limited to a small keypad, a display, a speaker, a microphone, a joystick, and the like.

The processor 910 is responsible for managing the bus architecture and general processing, and the memory 920 may store data used by the processor 910 when performing operations.

In an embodiment, the processor 910 may be a central processing unit (CPU), an application specific integrated circuit (ASIC), a field programmable gate array (FPGA), or a complex programmable logic device (CPLD), and the processor may also adopt a multi-core architecture.

The processor calls a computer program stored in the memory to perform any of the methods provided by the embodiments of the present application based on an obtained executable instruction. The processor and the memory can also be arranged physically separately.

In some embodiments, the codeword indicator includes one or more of the following:

a second identifier;

a first identifier and a second identifier; or

an index of an identifier pair consisting of a first identifier and a second identifier,

where the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

In some embodiments, determining the first codeword and the second codeword based on the measurement signal and the codeword indicator includes:

in case of receiving a group of configuration messages transmitted from the network device, and a codeword indicator in the configuration message including the second identifier, determining the second codeword based on the second identifier; and
determining a first codeword based on a first set and a channel measurement result corresponding to the measurement signal, where the first set is a beamforming codebook used by the network device.

In some embodiments, determining the first codeword and the second codeword based on the measurement signal and the codeword indicator includes:

in case of receiving a group of configuration messages transmitted from the network device, and a codeword indicator in the configuration message including the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword;

and

determining the first codeword based on a channel measurement result corresponding to the measurement signal, the third codeword and the neighbor codeword.

In some embodiments, determining the first codeword and the second codeword based on the measurement signal and the codeword indicator includes:

in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to the terminal;

determining the first codeword based on the channel measurement result corresponding to the channel from the network device to the RIS and a first set, where the first set is a beamforming codebook used by the network device; and

determining the second codeword based on the channel measurement result corresponding to the channel from the RIS to the terminal and a second set, where the second set is a beamforming codebook used by the RIS.

In some embodiments, determining the first codeword and the second codeword based on the measurement signal and the codeword indicator includes:

in case of receiving multiple groups of configuration messages transmitted from the network device, and a codeword indicator in each group of configuration messages including the first identifier and the second identifier, determining a third codeword and a fourth codeword corresponding to each group of configuration messages based on a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

In some embodiments, determining the first codeword and the second codeword based on the measurement signal and the codeword indicator includes:

in case of receiving multiple groups of configuration messages transmitted from the network device, and a codeword indicator in each group of configuration messages including the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

In some embodiments, transmitting the first codeword and the second codeword to the network device includes: transmitting an identifier of the first codeword and an identifier of the second codeword to the network device in a fixed overhead way.

In some embodiments, transmitting the first codeword and the second codeword to the network device includes: transmitting an index of a codeword pair consisting of the first codeword and the second codeword to the network device in a fixed overhead way.

In some embodiments, transmitting the first codeword and the second codeword to the network device includes: transmitting an identifier of the first codeword and an identifier of the second codeword to the network device in a segmented codeword transmission way.

In some embodiments, transmitting the identifier of the first codeword and the identifier of the second codeword to the network device in the segmented codeword transmission way includes:

transmitting the identifier of the second codeword and an identifier length of the first codeword to the network device as a first segment; and

transmitting the identifier of the first codeword to the network device as a second segment.

In some embodiments, in case that a relative position between the network device and the RIS is fixed, a transmission time interval of the second segment is longer than a transmission time interval of the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

It should be noted that the above-mentioned terminal provided by the embodiment of the present application can implement all the method steps in the above-mentioned method embodiments performed by the terminal and may achieve the same technical effect. The parts and beneficial effects of this embodiment that are the same as those of the method embodiments are not described in detail.

FIG. 10 is a schematic structural diagram of a network device according to an embodiment of the present application. As shown in FIG. 10, the network device includes a memory 1020, a transceiver 1000 and a processor 1010, where the memory 1020 is used for storing a computer program, the transceiver 1000 is used for receiving and transmitting data under control of the processor 1010, and the processor 1010 is used for reading a computer program in the memory 1020 and performing the following operations.

The transceiver 1000 is used for transmitting and receiving data under control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. A bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field programmable gate array (FPGA) or a complex programmable logic device (CPLD), and the processor may also adopt a multi-core architecture.

In some embodiments, receiving the first codeword and the second codeword transmitted from the terminal includes:

receiving an identifier of the first codeword and an identifier of the second codeword transmitted from the terminal in a fixed overhead way.

In some embodiments, receiving the first codeword and the second codeword transmitted from the terminal includes:

receiving an index of a codeword pair consisting of the first codeword and the second codeword transmitted from the terminal in a fixed overhead way.

In some embodiments, receiving the first codeword and the second codeword transmitted from the terminal includes:

receiving an identifier of the first codeword and an identifier of the second codeword transmitted from the terminal in a segmented codeword transmission way.

In some embodiments, receiving the identifier of the first codeword and the identifier of the second codeword transmitted from the terminal in the segmented codeword transmission way includes:

receiving a first segment transmitted from the terminal, where the first segment is the identifier of the second codeword and an identifier length of the first codeword; and

receiving a second segment transmitted from the terminal, where the second segment is the identifier of the first codeword.

In some embodiments, in case that a relative position between the network device and the RIS is fixed, a reception time interval for the second segment is longer than a reception time interval for the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

It should be noted that the above-mentioned network device provided by the embodiments of the present application can implement all the method steps in the above-mentioned method embodiments performed by the network device and may achieve the same technical effect. The parts and beneficial effects of this embodiment that are the same as those of the method embodiments are not described in detail.

FIG. 11 is a first schematic structural diagram of an apparatus for codeword transmission according to an embodiment of the present application. As shown in FIG. 11, an embodiment of the present application further provides an apparatus for codeword transmission, including: a first receiving module 1101, a first determining module 1102 and a first transmitting module 1103.

The first receiving module 1101 is used for receiving a configuration message transmitted from a network device, where the configuration message includes a measurement signal and a codeword indicator.

The first determining module 1102 is used for determining a first codeword and a second codeword based on the measurement signal and the codeword indicator, where the first codeword is used to determine a beamforming codeword used by the network device, and the second codeword is used to determine a beamforming codeword used by a reconfigurable intelligent meta-surface (RIS).

The first transmitting module 1103 is used for transmitting the first codeword and the second codeword to the network device.

In some embodiments, the codeword indicator includes one or more of the following:

a second identifier;

a first identifier and a second identifier; or

an index of an identifier pair consisting of a first identifier and a second identifier,

where the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

In some embodiments, the first determining module 1102 is specifically used for: in case of receiving a group of configuration messages transmitted from the network device, and a codeword indicator in the configuration message including the second identifier, determining the second codeword based on the second identifier; and determining a first codeword based on a first set and a channel measurement result corresponding to the measurement signal, where the first set is a beamforming codebook used by the network device.

In some embodiments, the first determining module 1102 is specifically used for: in case of receiving a group of configuration messages transmitted from the network device, and a codeword indicator in the configuration message including the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

In some embodiments, the first determining module 1102 is specifically used for: in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to a terminal;

determining the first codeword based on the channel measurement result corresponding to the channel from the network device to the RIS and a first set, where the first set is a beamforming codebook used by the network device; and

determining the second codeword based on the channel measurement result corresponding to the channel from the RIS to the terminal and a second set, where the second set is a beamforming codebook used by the RIS.

In some embodiments, the first determining module 1102 is specifically used for: in case of receiving multiple groups of configuration messages transmitted from the network device, and a codeword indicator in each group of configuration messages including the first identifier and the second identifier, determining a third codeword and a fourth codeword corresponding to each group of configuration messages based on a first identifier and a second identifier in each group of configuration messages; and
determining the first codeword and the second codeword based on channel measurement results respectively corresponding to measurement signals in the multiple groups of configuration messages and third codewords and fourth codewords respectively corresponding to the multiple groups of configuration messages.

In some embodiments, the first determining module 1102 is specifically used for: in case of receiving multiple groups of configuration messages transmitted from the network device, and a codeword indicator in each group of configuration messages including the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and
determining the first codeword and the second codeword based on channel measurement results respectively corresponding to measurement signals in the multiple groups of configuration messages and third codewords and fourth codewords respectively corresponding to the multiple groups of configuration messages.

In some embodiments, the first transmitting module 1103 is specifically used for: transmitting an identifier of the first codeword and an identifier of the second codeword to the network device in a fixed overhead way.

In some embodiments, the first transmitting module 1103 is specifically used for: transmitting an index of a codeword pair consisting of the first codeword and the second codeword to the network device in a fixed overhead way.

In some embodiments, the first transmitting module 1103 is specifically used for: transmitting an identifier of the first codeword and an identifier of the second codeword to the network device in a segmented codeword transmission way.

In some embodiments, the first transmitting module 1103 is specifically used for: transmitting the identifier of the second codeword and an identifier length of the first codeword to the network device as a first segment; and
transmitting the identifier of the first codeword to the network device as a second segment.

In some embodiments, in case that a relative position between the network device and the RIS is fixed, a transmission time interval of the second segment is longer than a transmission time interval of the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

It should be noted that the apparatus for codeword transmission provided by the embodiments of the present application can implement all the method steps in the above-mentioned method embodiments performed by a terminal and may achieve the same technical effect. The parts and beneficial effects of this embodiment that are the same as those of the method embodiments are not described in detail.

FIG. 12 is a second schematic structural diagram of an apparatus for codeword transmission according to an embodiment of the present application. As shown in FIG. 12, an embodiment of the present application further provides an apparatus for codeword transmission, including: a second transmitting module 1201 and a second receiving module 1202.

The second transmitting module 1201 is used for transmitting a configuration message to a terminal, where the configuration message includes a measurement signal and a codeword indicator, the measurement signal and the codeword indicator are used to determine a first codeword and a second codeword, the first codeword is used to determine a beamforming codeword used by a network device, and the second codeword is used to determine a beamforming codeword used by a reconfigurable intelligent meta-surface (RIS).

The second receiving module 1202 is used for receiving the first codeword and the second codeword transmitted from the terminal.

In some embodiments, the second receiving module 1202 is specifically used for: receiving an identifier of the first codeword and an identifier of the second codeword transmitted from the terminal in a fixed overhead way.

In some embodiments, the second receiving module 1202 is specifically used for: receiving an index of a codeword pair consisting of the first codeword and the second codeword transmitted from the terminal in a fixed overhead way.

In some embodiments, the second receiving module 1202 is specifically used for: receiving an identifier of the first codeword and an identifier of the second codeword transmitted from the terminal in a segmented codeword transmission way.

In some embodiments, the second receiving module 1202 is specifically used for: receiving a first segment transmitted from the terminal, where the first segment is the identifier of the second codeword and an identifier length of the first codeword; and

receiving a second segment transmitted from the terminal, where the second segment is the identifier of the first codeword.

In some embodiments, in case that a relative position between the network device and the RIS is fixed, a reception time interval for the second segment is longer than a reception time interval for the first segment.

In some embodiments, the configuration message further includes a first flag bit, where the first flag bit is used to characterize a codeword type corresponding to an identifier included in the codeword indicator.

In some embodiments, the configuration message further includes a second flag bit, where the second flag bit is used to characterize a quantity of identifiers included in the codeword indicator.

In some embodiments, the configuration message further includes a codeword feedback resource identifier, where the codeword feedback resource identifier is used to characterize a resource for the terminal to perform codeword feedback.

It should be noted that the apparatus for codeword transmission provided by the embodiment of the present application can implement all the method steps in the above-mentioned method embodiments performed by a network device and may achieve the same technical effect. The parts and beneficial effects of this embodiment that are the same as those of the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In some embodiments, an embodiment of the present application further provides a processor-readable storage medium, where the processor-readable storage medium stores a computer program, and the computer program is used to cause a processor to perform the methods provided by the above embodiments, including:

receiving a configuration message transmitted from a network device, where the configuration message includes a measurement signal and a codeword indicator;

determining a first codeword and a second codeword based on the measurement signal and the codeword indicator, where the first codeword is used to determine a beamforming codeword used by the network device, and the second codeword is used to determine a beamforming codeword used by a reconfigurable intelligent meta-surface (RIS); and

transmitting the first codeword and the second codeword to the network device; or including:

transmitting a configuration message to a terminal, where the configuration message includes a measurement signal and a codeword indicator, the measurement signal and the codeword indicator are used to determine a first codeword and a second codeword, the first codeword is used to determine a beamforming codeword used by the network device, and the second codeword is used to determine a beamforming codeword used by a reconfigurable intelligent meta-surface (RIS); and

receiving the first codeword and the second codeword transmitted from the terminal.

It should be noted that the processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

It should be noted that the terms "first", "second", etc. in the description and claims of the present application are used to distinguish similar objects, and are not used to describe a specific order or sequence. It should be understood that the terms used in this mode may be interchangeable where appropriate, so that the embodiments of the present application can be implemented in an order other than those illustrated or described here, and the objects distinguished by "first" and "second" are generally of the same type, and the quantity of objects is not limited, for example, the first object can be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

In this application, "determine B based on A" means that the factor A should be considered when determining B. It is not limited to "B can be determined based on A alone", but should further include: "determine B based on A and C", "determine B based on A, C and E", "determine C based on A, and further determine B based on C", etc. In addition, it can further include taking A as a condition for determining B, for example, "when A meets the first condition, use the first method to determine B"; for example, "when A meets the second condition, determine B", etc.; for another example, "when A meets the third condition, determine B based on the first parameter", etc. Of course, it can also be a condition that takes A as a factor for determining B, for example, "when A meets the first condition, use the first method to determine C, and further determine B based on C", etc.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

As will be appreciated by those skilled in the art, embodiments of the present application may be provided as a method, a system, or a computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for codeword transmission, performed by a terminal, comprising:

   receiving a configuration message transmitted from a network device, wherein the configuration message comprises a measurement signal and a codeword indicator;
   determining a first codeword and a second codeword based on the measurement signal and the codeword indicator, wherein the first codeword is used to determine a beamforming codeword used by the network device, and the second codeword is used to determine a beamforming codeword used by a reconfigurable intelligent meta-surface, RIS; and
   transmitting the first codeword and the second codeword to the network device.

2. The method of claim 1, wherein the codeword indicator comprises one or more of the following:

   a second identifier;
   a first identifier and a second identifier; or
   an index of an identifier pair consisting of a first identifier and a second identifier,
   wherein the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

3. The method of claim 2, wherein determining the first codeword and the second codeword based on the measurement signal and the codeword indicator comprises:

in case of receiving a group of configuration messages transmitted from the network device, and a codeword indicator in the configuration message comprising the second identifier, determining the second codeword based on the second identifier; and

determining a first codeword based on a first set and a channel measurement result corresponding to the measurement signal, wherein the first set is a beamforming codebook used by the network device.

4. The method of claim 2, wherein determining the first codeword and the second codeword based on the measurement signal and the codeword indicator comprises:

in case of receiving a group of configuration messages transmitted from the network device, and a codeword indicator in the configuration message comprising the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

5. The method of claim 2, wherein determining the first codeword and the second codeword based on the measurement signal and the codeword indicator comprises:

in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to the terminal;

determining the first codeword based on the channel measurement result corresponding to the channel from the network device to the RIS and a first set, wherein the first set is a beamforming codebook used by the network device; and

determining the second codeword based on the channel measurement result corresponding to the channel from the RIS to the terminal and a second set, wherein the second set is a beamforming codebook used by the RIS.

6. The method of claim 2, wherein determining the first codeword and the second codeword based on the measurement signal and the codeword indicator comprises:

in case of receiving multiple groups of configuration messages transmitted from the network device, and a codeword indicator in each group of configuration messages comprising the first identifier and the second identifier, determining a third codeword and a fourth codeword corresponding to each group of configuration messages based on a first identifier and a second identifiers in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

7. The method of claim 2, wherein determining the first codeword and the second codeword based on the measurement signal and the codeword indicator comprises:

in case of receiving multiple groups of configuration messages transmitted from the network device, and a codeword indicator in each group of configuration messages comprising the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

8. The method of claim 1, wherein transmitting the first codeword and the second codeword to the network device comprises:
transmitting an identifier of the first codeword and an identifier of the second codeword to the network device in a fixed overhead way.

9. The method of claim 1, wherein transmitting the first codeword and the second codeword to the network device comprises:
transmitting an index of a codeword pair consisting of the first codeword and the second codeword to the network device in a fixed overhead way.

10. The method of claim 1, wherein transmitting the first codeword and the second codeword to the network device comprises:
transmitting an identifier of the first codeword and an identifier of the second codeword to the network device in a segmented codeword transmission way.

11. The method of claim 10, wherein transmitting the identifier of the first codeword and the identifier of the second codeword to the network device in the segmented codeword transmission way comprises:

transmitting the identifier of the second codeword and an identifier length of the first codeword to the network device as a first segment; and
transmitting the identifier of the first codeword to the network device as a second segment.

12. The method of claim 11, wherein in case that a relative position between the network device and the RIS is fixed, a transmission time interval of the second segment is longer than a transmission time interval of the first segment.

13. The method of claim 1, wherein the configuration message further comprises a first flag bit, wherein the first flag bit is used to characterize a codeword type corresponding to an identifier comprised in the codeword indicator.

14. The method of claim 1, wherein the configuration message further comprises a second flag bit, wherein the second flag bit is used to characterize a quantity of identifiers comprised in the codeword indicator.

15. The method of claim 1, wherein the configuration message further comprises a codeword feedback resource identifier, wherein the codeword feedback resource identifier is used to characterize a resource for the terminal to perform codeword feedback.

16. A method for codeword transmission, performed by a network device, comprising:

transmitting a configuration message to a terminal, wherein the configuration message comprises a measurement signal and a codeword indicator, the measurement signal and the codeword indicator are used to determine a first codeword and a second codeword, the first codeword is used to determine a beamforming codeword used by the network device, and the second codeword is used to determine a beamforming codeword used by a reconfigurable intelligent meta-surface, RIS; and
receiving the first codeword and the second codeword transmitted from the terminal.

17. The method of claim 16, wherein receiving the first codeword and the second codeword transmitted from the terminal comprises:
receiving an identifier of the first codeword and an identifier of the second codeword transmitted from the terminal in a fixed overhead way.

18. The method of claim 16, wherein receiving the first codeword and the second codeword transmitted from the terminal comprises:
receiving an index of a codeword pair consisting of the first codeword and the second codeword transmitted from the terminal in a fixed overhead way.

19. The method of claim 16, wherein receiving the first codeword and the second codeword transmitted from the terminal comprises:

receiving an identifier of the first codeword and an identifier of the second codeword transmitted from the terminal in a segmented codeword transmission way.

20. The method of claim 19, wherein receiving the identifier of the first codeword and the identifier of the second codeword transmitted from the terminal in the segmented codeword transmission way comprises:

receiving a first segment transmitted from the terminal, wherein the first segment is the identifier of the second codeword and an identifier length of the first codeword; and

receiving a second segment transmitted from the terminal, wherein the second segment is the identifier of the first codeword.

21. The method of claim 20, wherein in case that a relative position between the network device and the RIS is fixed, a reception time interval for the second segment is longer than a reception time interval for the first segment.

22. The method of claim 16, wherein the configuration message further comprises a first flag bit, wherein the first flag bit is used to characterize a codeword type corresponding to an identifier comprised in the codeword indicator; or

the configuration message further comprises a second flag bit, wherein the second flag bit is used to characterize a quantity of identifiers comprised in the codeword indicator; or

the configuration message further comprises a codeword feedback resource identifier, wherein the codeword feedback resource identifier is used to characterize a resource for the terminal to perform codeword feedback.

23. A terminal, comprising a memory, a transceiver and a processor,

wherein the memory is used for storing a computer program, the transceiver is used for receiving and transmitting data under control of the processor, and the processor is used for reading a computer program in the memory and performing the following operations of:

receiving a configuration message transmitted from a network device, wherein the configuration message comprises a measurement signal and a codeword indicator;

determining a first codeword and a second codeword based on the measurement signal and the codeword indicator, wherein the first codeword is used to determine a beamforming codeword used by the network device, and the second codeword is used to determine a beamforming codeword used by a reconfigurable intelligent meta-surface, RIS; and

transmitting the first codeword and the second codeword to the network device.

24. The terminal of claim 23, wherein the codeword indicator comprises one or more of the following:

a second identifier;

a first identifier and a second identifier; or

an index of an identifier pair consisting of a first identifier and a second identifier,

wherein the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

25. The terminal of claim 24, wherein determining the first codeword and the second codeword based on the measurement signal and the codeword indicator comprises:

in case of receiving a group of configuration messages transmitted from the network device, and a codeword indicator in the configuration message comprising the second identifier, determining the second codeword based on the second identifier; and

determining a first codeword based on a first set and a channel measurement result corresponding to the measurement signal, wherein the first set is a beamforming codebook used by the network device.

26. The terminal of claim 24, wherein determining the first codeword and the second codeword based on the measurement signal and the codeword indicator comprises:

in case of receiving a group of configuration messages transmitted from the network device, and a codeword indicator in the configuration message comprising the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

27. The terminal of claim 24, wherein determining the first codeword and the second codeword based on the measurement signal and the codeword indicator comprises:

in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to the terminal;

determining the first codeword based on the channel measurement result corresponding to the channel from the network device to the RIS and a first set, wherein the first set is a beamforming codebook used by the network device; and

determining the second codeword based on the channel measurement result corresponding to the channel from the RIS to the terminal and a second set, wherein the second set is a beamforming codebook used by the RIS.

28. The terminal of claim 24, wherein determining the first codeword and the second codeword based on the measurement signal and the codeword indicator comprises:

in case of receiving multiple groups of configuration messages transmitted from the network device, and a codeword indicator in each group of configuration messages comprising the first identifier and the second identifier, determining a third codeword and a fourth codeword corresponding to each group of configuration messages based on a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

29. The terminal of claim 24, wherein determining the first codeword and the second codeword based on the measurement signal and the codeword indicator comprises:

in case of receiving multiple groups of configuration messages transmitted from the network device, and a codeword indicator in each group of configuration messages comprising the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and

determining the first codeword and the second codeword based on channel measurement results respectively corresponding to measurement signals in the multiple groups of configuration messages and third codewords and fourth codewords respectively corresponding to the multiple groups of configuration messages.

30. The terminal of claim 23, wherein transmitting the first codeword and the second codeword to the network device comprises:

transmitting an identifier of the first codeword and an identifier of the second codeword to the network device in a fixed overhead way.

31. The terminal of claim 23, wherein transmitting the first codeword and the second codeword to the network device comprises:

transmitting an index of a codeword pair consisting of the first codeword and the second codeword to the network device in a fixed overhead way.

32. The terminal of claim 23, wherein transmitting the first codeword and the second codeword to the network device comprises:
transmitting an identifier of the first codeword and an identifier of the second codeword to the network device in a segmented codeword transmission way.

33. The terminal of claim 32, wherein transmitting the identifier of the first codeword and the identifier of the second codeword to the network device in the segmented codeword transmission way comprises:

transmitting the identifier of the second codeword and an identifier length of the first codeword to the network device as a first segment; and
transmitting the identifier of the first codeword to the network device as a second segment.

34. The terminal of claim 33, wherein in case that a relative position between the network device and the RIS is fixed, a transmission time interval of the second segment is longer than a transmission time interval of the first segment.

35. The terminal of claim 23, wherein the configuration message further comprises a first flag bit, wherein the first flag bit is used to characterize a codeword type corresponding to an identifier comprised in the codeword indicator.

36. The terminal of claim 23, wherein the configuration message further comprises a second flag bit, wherein the second flag bit is used to characterize a quantity of identifiers comprised in the codeword indicator.

37. The terminal of claim 23, wherein the configuration message further comprises a codeword feedback resource identifier, wherein the codeword feedback resource identifier is used to characterize a resource for the terminal to perform codeword feedback.

38. A network device, comprising a memory, a transceiver and a processor,
wherein the memory is used for storing a computer program, the transceiver is used for receiving and transmitting data under control of the processor, and the processor is used for reading a computer program in the memory and performing the following operations of:

transmitting a configuration message to a terminal, wherein the configuration message comprises a measurement signal and a codeword indicator, the measurement signal and the codeword indicator are used to determine a first codeword and a second codeword, the first codeword is used to determine a beamforming codeword used by the network device, and the second codeword is used to determine a beamforming codeword used by a reconfigurable intelligent meta-surface, RIS; and
receiving the first codeword and the second codeword transmitted from the terminal.

39. The network device of claim 38, wherein receiving the first codeword and the second codeword transmitted from the terminal comprises:
receiving an identifier of the first codeword and an identifier of the second codeword transmitted from the terminal in a fixed overhead way.

40. The network device of claim 38, wherein receiving the first codeword and the second codeword transmitted from the terminal comprises:
receiving an index of a codeword pair consisting of the first codeword and the second codeword transmitted from the terminal in a fixed overhead way.

41. The network device of claim 38, wherein receiving the first codeword and the second codeword transmitted from the terminal comprises:
receiving an identifier of the first codeword and an identifier of the second codeword transmitted from the terminal in a segmented codeword transmission way.

42. The network device of claim 41, wherein receiving the identifier of the first codeword and the identifier of the second codeword transmitted from the terminal in the segmented codeword transmission way comprises:

receiving a first segment transmitted from the terminal, wherein the first segment is the identifier of the second codeword and an identifier length of the first codeword; and
receiving a second segment transmitted from the terminal, wherein the second segment is the identifier of the first codeword.

43. The network device of claim 42, wherein in case that a relative position between the network device and the RIS is fixed, a reception time interval for the second segment is longer than a reception time interval for the first segment.

44. The network device of claim 38, wherein the configuration message further comprises a first flag bit, wherein the first flag bit is used to characterize a codeword type corresponding to an identifier comprised in the codeword indicator; or

the configuration message further comprises a second flag bit, wherein the second flag bit is used to characterize a quantity of identifiers comprised in the codeword indicator; or

the configuration message further comprises a codeword feedback resource identifier, wherein the codeword feedback resource identifier is used to characterize a resource for the terminal to perform codeword feedback.

45. An apparatus for codeword transmission, comprising:

a first receiving module, used for receiving a configuration message transmitted from a network device, wherein the configuration message comprises a measurement signal and a codeword indicator;

a first determining module, used for determining a first codeword and a second codeword based on the measurement signal and the codeword indicator, wherein the first codeword is used to determine a beamforming codeword used by the network device, and the second codeword is used to determine a beamforming codeword used by a reconfigurable intelligent meta-surface, RIS; and

a first transmitting module, used for transmitting the first codeword and the second codeword to the network device.

46. The apparatus of claim 45, wherein the codeword indicator comprises one or more of the following:

a second identifier;

a first identifier and a second identifier; or

an index of an identifier pair consisting of a first identifier and a second identifier,

wherein the first identifier is used to indicate a third codeword, the second identifier is used to indicate a fourth codeword, the index is used to indicate the third codeword and the fourth codeword, the third codeword is a beamforming codeword used by the network device when transmitting the configuration message, and the fourth codeword is a beamforming codeword used by the RIS when transmitting the configuration message.

47. The apparatus of claim 46, wherein the first determining module is specifically used for:

in case of receiving a group of configuration messages transmitted from the network device, and a codeword indicator in the configuration message comprising the second identifier, determining the second codeword based on the second identifier; and

determining a first codeword based on a first set and a channel measurement result corresponding to the measurement signal, wherein the first set is a beamforming codebook used by the network device.

48. The apparatus of claim 46, wherein the first determining module is specifically used for:

in case of receiving a group of configuration messages transmitted from the network device, and a codeword indicator in the configuration message comprising the index of the identifier pair consisting of the first identifier and the second identifier, determining the third codeword and the fourth codeword based on the index;

determining the second codeword based on the fourth codeword;

determining a neighbor codeword adjacent to the third codeword within a given range based on the third codeword; and

determining the first codeword based on a channel measurement result corresponding to the measurement signal, the third codeword and the neighbor codeword.

49. The apparatus of claim 46, wherein the first determining module is specifically used for:

in case of receiving a group of configuration messages transmitted from the network device, determining a codeword indicated by the codeword indicator based on a codeword indicator in the configuration message;

dividing a channel measurement result corresponding to the measurement signal based on the codeword indicated by the codeword indicator, to obtain a channel measurement result corresponding to a channel from the network device to the RIS and a channel measurement result corresponding to a channel from the RIS to a terminal;

determining the first codeword based on the channel measurement result corresponding to the channel from the network device to the RIS and a first set, wherein the first set is a beamforming codebook used by the network device; and

determining the second codeword based on the channel measurement result corresponding to the channel from the RIS to the terminal and a second set, wherein the second set is a beamforming codebook used by the RIS.

50. The apparatus of claim 46, wherein the first determining module is specifically used for:

in case of receiving multiple groups of configuration messages transmitted from the network device, and a codeword indicator in each group of configuration messages comprising the first identifier and the second identifier, determining a third codeword and a fourth codeword corresponding to each group of configuration messages based on a first identifier and a second identifier in each group of configuration messages; and determining the first codeword and the second codeword based on channel measurement results respectively corresponding to measurement signals in the multiple groups of configuration messages and third codewords and fourth codewords respectively corresponding to the multiple groups of configuration messages.

51. The apparatus of claim 46, wherein the first determining module is used for:

in case of receiving multiple groups of configuration messages transmitted from the network device, and a codeword indicator in each group of configuration messages comprising the index of the identifier pair consisting of the first identifier and the second identifier, determining a third codeword and a fourth codeword corresponding to each group of configuration messages based on the index of the identifier pair consisting of a first identifier and a second identifier in each group of configuration messages; and determining the first codeword and the second codeword based on channel measurement results respectively corresponding to measurement signals in the multiple groups of configuration messages and third codewords and fourth codewords respectively corresponding to the multiple groups of configuration messages.

52. The apparatus of claim 45, wherein the first transmitting module is specifically used for:
transmitting an identifier of the first codeword and an identifier of the second codeword to the network device in a fixed overhead way.

53. The apparatus of claim 45, wherein the first transmitting module is specifically used for:
transmitting an index of a codeword pair consisting of the first codeword and the second codeword to the network device in a fixed overhead way.

54. The apparatus of claim 45, wherein the first transmitting module is specifically used for:
transmitting an identifier of the first codeword and an identifier of the second codeword to the network device in a segmented codeword transmission way.

55. The apparatus of claim 54, wherein the first transmitting module is specifically used for: transmitting the identifier of the second codeword and an identifier length of the first codeword to the network device as a first segment; and transmitting the identifier of the first codeword to the network device as a second segment.

56. The apparatus of claim 55, wherein in case that a relative position between the network device and the RIS is fixed, a transmission time interval of the second segment is longer than a transmission time interval of the first segment.

57. The apparatus of claim 45, wherein the configuration message further comprises a first flag bit, wherein the first flag bit is used to characterize a codeword type corresponding to an identifier comprised in the codeword indicator.

58. The apparatus of claim 45, wherein the configuration message further comprises a second flag bit, wherein the second flag bit is used to characterize a quantity of identifiers comprised in the codeword indicator.

59. The apparatus of claim 45, wherein the configuration message further comprises a codeword feedback resource identifier, wherein the codeword feedback resource identifier is used to characterize a resource for the terminal to perform codeword feedback.

60. An apparatus for codeword transmission, comprising:

a second transmitting module, used for transmitting a configuration message to a terminal, wherein the configuration message comprises a measurement signal and a codeword indicator, the measurement signal and the codeword indicator are used to determine a first codeword and a second codeword, the first codeword is used to determine a beamforming codeword used by a network device, and the second codeword is used to determine a beamforming codeword used by a reconfigurable intelligent meta-surface, RIS; and

a second receiving module, used for receiving the first codeword and the second codeword transmitted from the terminal.

61. The apparatus of claim 60, wherein the second receiving module is specifically used for:

receiving an identifier of the first codeword and an identifier of the second codeword transmitted from the terminal in a fixed overhead way.

62. The apparatus of claim 60, wherein the second receiving module is specifically used for:

receiving an index of a codeword pair consisting of the first codeword and the second codeword transmitted from the terminal in a fixed overhead way.

63. The apparatus of claim 60, wherein the second receiving module is specifically used for:

receiving an identifier of the first codeword and an identifier of the second codeword transmitted from the terminal in a segmented codeword transmission way.

64. The apparatus of claim 63, wherein the second receiving module is specifically used for:

receiving a first segment transmitted from the terminal, wherein the first segment is the identifier of the second codeword and an identifier length of the first codeword; and

receiving a second segment transmitted from the terminal, wherein the second segment is the identifier of the first codeword.

65. The apparatus of claim 64, wherein in case that a relative position between the network device and the RIS is fixed, a reception time interval for the second segment is longer than a reception time interval for the first segment.

66. The apparatus of claim 60, wherein the configuration message further comprises a first flag bit, wherein the first flag bit is used to characterize a codeword type corresponding to an identifier comprised in the codeword indicator; or

the configuration message further comprises a second flag bit, wherein the second flag bit is used to characterize a quantity of identifiers comprised in the codeword indicator; or

the configuration message further comprises a codeword feedback resource identifier, wherein the codeword feedback resource identifier is used to characterize a resource for the terminal to perform codeword feedback.

67. A processor-readable storage medium, wherein the processor-readable storage medium stores a computer program, and the computer program is used to cause a processor to perform the method of any one of claims 1 to 15.

68. A processor-readable storage medium, wherein the processor-readable storage medium stores a computer program, and the computer program is used to cause a processor to perform the method of any one of claims 16 to 22.

Receiving a configuration message transmitted from a network device, where the configuration message includes a measurement signal and a codeword indicator — 101

Determining a first codeword and a second codeword based on the measurement signal and the codeword indicator, where the first codeword is used to determine a beamforming codeword used by the network device, and the second codeword is used to determine a beamforming codeword used by an RIS — 102

Transmitting the first codeword and the second codeword to the network device — 103

FIG. 1

RIS

Codeword1                    Codeword2

Moment1

Base station                 Terminal

RIS

Codeword1                    Codeword3

Moment2

Base station                 Terminal

RIS

Codeword1                    Codeword4

Moment3

Base station                 Terminal

FIG. 2

FIG. 3

FIG. 4

| First codeword identifier | Second codeword identifier | | … | | First codeword identifier | Second codeword identifier |
|---|---|---|---|---|---|---|
| | | | | | | |

FIG. 5

| part1 | part2 | | … | | part1 | part2 |
|---|---|---|---|---|---|---|
| | | | | | | |

FIG. 6

| part1 | part2 |
|---|---|
| Identifier length of first codeword | Identifier length of second codeword |

FIG. 7

Transmitting a configuration message to a terminal, where the configuration message includes a measurement signal and a codeword indicator, the measurement signal and the codeword indicator are used to determine a first codeword and a second codeword, the first codeword is used to determine a beamforming codeword used by the network device, and the second codeword is used to determine a beamforming codeword used by an RIS ⟋801

Receiving the first codeword and the second codeword transmitted from the terminal ⟋802

FIG. 8

Terminal

Processor — 900

Bus interface

Transceiver — 910

Memory — 920

User interface — 930

FIG. 9

Network device

Processor — 1000

Bus interface

Transceiver — 1010

Memory — 1020

FIG. 10

1101

First receiving module

1102

First determining module

1103

First transmitting module

FIG. 11

1201

Second transmitting module

1202

Second receiving module

FIG. 12

| | | |
|---|---|---|
| | **INTERNATIONAL SEARCH REPORT** | International application No. **PCT/CN2023/101358** |

**A. CLASSIFICATION OF SUBJECT MATTER**

H04B7/06(2006.01)i

According to International Patent Classification (IPC) or to both national classification and IPC

**B. FIELDS SEARCHED**

Minimum documentation searched (classification system followed by classification symbols)

IPC:H04B H04W H04L

Documentation searched other than minimum documentation to the extent that such documents are included in the fields searched

Electronic data base consulted during the international search (name of data base and, where practicable, search terms used)

CNTXT, CNKI, ENTXT, DWPI, IEEE, 3GPP: 波束赋型, 波束赋形, 配置, 测量, 信号, 第二, 第一, 码本, 指示, 可重构智能超表面, 标识, 索引, codebook, first, second, RIS, reconfigurable, intelligent, meta, surface, beam forming, config, measur+, signal, indificat+, indicator, index

**C. DOCUMENTS CONSIDERED TO BE RELEVANT**

| Category* | Citation of document, with indication, where appropriate, of the relevant passages | Relevant to claim No. |
|---|---|---|
| A | CN 110380768 A (HUAWEI TECHNOLOGIES CO., LTD.) 25 October 2019 (2019-10-25) description, paragraphs 6-1510 | 1-68 |
| A | CN 114126055 A (DATANG MOBILE COMMUNICATIONS EQUIPMENT CO., LTD.) 01 March 2022 (2022-03-01) entire document | 1-68 |
| A | CN 114128174 A (QUALCOMM INC.) 01 March 2022 (2022-03-01) entire document | 1-68 |
| A | CN 114465699 A (SHANGHAI LANGBO COMMUNICATION TECHNOLOGY CO., LTD.) 10 May 2022 (2022-05-10) entire document | 1-68 |
| A | KR 102195232 B1 (FOUNDATION OF SOONGSIL UNIVERSITY-INDUSTRY COOPERATION) 24 December 2020 (2020-12-24) entire document | 1-68 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 September 2023** | **20 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
| --- | --- |
| | **PCT/CN2023/101358** |

**C.  DOCUMENTS CONSIDERED TO BE RELEVANT**

| Category* | Citation of document, with indication, where appropriate, of the relevant passages | Relevant to claim No. |
| --- | --- | --- |
| A | 3GPP. ""RWS-210392""<br>*3GPP tsg_ran\tsg_ran,* 08 June 2021 (2021-06-08),<br>      entire document | 1-68 |

Form PCT/ISA/210 (second sheet) (July 2022)

**INTERNATIONAL SEARCH REPORT**
**Information on patent family members**

International application No.

**PCT/CN2023/101358**

| Patent document cited in search report | | | Publication date (day/month/year) | Patent family member(s) | | | Publication date (day/month/year) |
|---|---|---|---|---|---|---|---|
| CN | 110380768 | A | 25 October 2019 | US | 2020044703 | A1 | 06 February 2020 |
| | | | | US | 2016323025 | A1 | 03 November 2016 |
| | | | | US | 10063299 | B2 | 28 August 2018 |
| | | | | AU | 2014377267 | A1 | 04 August 2016 |
| | | | | AU | 2014377267 | B2 | 25 January 2018 |
| | | | | KR | 20160105976 | A | 08 September 2016 |
| | | | | KR | 101895394 | B1 | 05 September 2018 |
| | | | | EP | 3579451 | A1 | 11 December 2019 |
| | | | | ES | 2730298 | T3 | 11 November 2019 |
| | | | | EP | 3086483 | A1 | 26 October 2016 |
| | | | | EP | 3086483 | A4 | 28 December 2016 |
| | | | | EP | 3086483 | B1 | 10 April 2019 |
| | | | | WO | 2015103752 | A1 | 16 July 2015 |
| | | | | US | 2018351617 | A1 | 06 December 2018 |
| | | | | US | 10469143 | B2 | 05 November 2019 |
| | | | | KR | 20180100256 | A | 07 September 2018 |
| CN | 114126055 | A | 01 March 2022 | None | | | |
| CN | 114128174 | A | 01 March 2022 | EP | 3981081 | A1 | 13 April 2022 |
| | | | | US | 2020389238 | A1 | 10 December 2020 |
| | | | | WO | 2020247705 | A1 | 10 December 2020 |
| | | | | EP | 4102732 | A1 | 14 December 2022 |
| CN | 114465699 | A | 10 May 2022 | None | | | |
| KR | 102195232 | B1 | 24 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 2022107942605